# EUROPEAN PATENT APPLICATION

(11) **EP 4 509 233 A1**
(43) Date of publication of application: **19.02.2025**
(21) Application number: 22962296.4
(22) Date of filing: 17.10.2022
(51) Int. Cl.: B08B 7/00

(54) **CLEANING APPARATUS, PRODUCTION SYSTEM, AND CLEANING METHOD**

(71) Applicant: Contemporary Amperex Technology Co., Limited, Ningde, Fujian 352100 (CN)
(72) Inventor: LIN, Jiang, Ningde, Fujian 352100 (CN); WANG, Weiwei, Ningde, Fujian 352100 (CN); LIN, Chuandong, Ningde, Fujian 352100 (CN); HUANG, Quanzhuang, Ningde, Fujian 352100 (CN); XUE, Fei, Ningde, Fujian 352100 (CN)
(74) Representative: Kraus & Lederer PartGmbB
(86) International application number: PCT/CN2022/125713
(87) International publication number: WO 2024/082098

(57) **Abstract**

Provided are a cleaning device (100), a production system (1000), and a cleaning method. The cleaning device (100) comprises a first fixing member (10), a second fixing member (20), and a laser assembly (30). The first fixing member (10) is configured to fix a housing (210); the second fixing member (20) is arranged opposite to the first fixing member (10) and is configured to fix an end cap (220); and the laser assembly (30) is arranged on a side of the first fixing member (10) and a side of the second fixing member (20), and is configured to clean the housing (210) and the end cap (220) when the end cap is partially closed into the housing (210).

## Description

### Technical Field

The present application relates to the field of batteries, and in particular, to a cleaning device, a production system, and a cleaning method.

### Background Art

In some products having a closable cap, taking a battery cell as an example, during assembly of an electrode assembly, a housing and an end cap of the battery cell, surfaces of the electrode assembly, the housing and the end cap are all stained with dirt generated during manufacturing, and the dirt is likely to lead to poor closing of the end cap into the housing, or even lead to safety risks of the battery cell.

### Summary of the Invention

In view of the above problems, the present application provides a cleaning device, a production system, and a cleaning method, which can solve the problem of poor welding that is likely to occur between a housing and an end cap of a material.

In a first aspect, the present application provides a cleaning device for cleaning a material. The material comprises a housing and an end cap. The cleaning device comprises:
a first fixing member configured to fix the housing;
a second fixing member arranged opposite to the first fixing member and configured to fix the end cap; and
a laser assembly arranged on a side of the first fixing member and a side of the second fixing member and configured to clean the housing and the end cap when the end cap is partially closed into the housing.

In the cleaning device according to an embodiment of the present application, the housing of the material is fixed by the first fixing member, and the end cap is fixed by the second fixing member; in addition, the laser assembly is arranged on the side of the first fixing member and the side of the second fixing member. With such a design, the material can be cleaned before welding, so that dirt generated during assembly of the housing and the end cap can be effectively prevented from entering the housing, and dust generated during laser cleaning can be effectively prevented from entering the material, thereby effectively solving the pollution defect in the welding of the end cap to the housing, and further improving the yield of welding the end cap to the housing.

In some embodiments, the first fixing member comprises a plurality of clamping members, which jointly clamp the housing.

In this way, with the arrangement of the clamping members, the housing can be moved smoothly when being cleaned.

In some embodiments, the plurality of clamping members are arranged in a circumferential direction of the housing.

In this way, when the plurality of clamping members are arranged in the circumferential direction of the housing, there is a larger clamped area of the housing, and the housing can be clamped more stably, thereby facilitating subsequent assembly.

In some embodiments, the cleaning device comprises a clamping driving component, which drives the plurality of clamping members to move closer to or away from each other.

In this way, the clamping driving component can control the clamping members to clamp housings with different contour shapes, so that the design of the clamping members is universal.

In some embodiments, the second fixing member comprises a first mounting member and a first suction member fixed to the first mounting member, and the first suction member is configured to suck the end cap.

In this way, the end cap can be sucked on the first suction member, so that the end cap can be stably fixed, thereby ensuring the cleaning effect. In addition, the first mounting member can push the end cap to be completely snap-fitted with the housing after the cleaning is completed.

In some embodiments, the cleaning device further comprises a protective shell arranged on the first mounting member, wherein the first suction member is located in the protective shell, and the protective shell is configured to cover at least part of an outer surface of the end cap.

In this way, the first suction member can prevent the end cap from shaking during the cleaning, and the protective shell can prevent the end cap from being damaged by laser.

In some embodiments, the cleaning device further comprises a rotation driving component, wherein the rotation driving component is configured to drive the first fixing member and the second fixing member to rotate, or to drive the laser assembly to rotate.

In this way, the rotation driving component enables the end cap and the housing to be cleaned omnidirectionally.

In some embodiments, the rotation driving component comprises a first driving subcomponent and a second driving subcomponent, wherein the first driving subcomponent is configured to drive the first fixing member to rotate, and the second driving subcomponent is configured to drive the second fixing member to rotate.

In this way, the first driving subcomponent and the second driving subcomponent can respectively drive the first fixing member and the second fixing member to rotate, so as to realize omnidirectional cleaning of the housing and the end cap.

In some embodiments, the first fixing member and the second fixing member rotate synchronously.

In this way, by using the first fixing member and the second fixing member, the housing and the end cap cannot be deformed when being cleaned.

In some embodiments, the cleaning device comprises a first holder and a rotating component, wherein the rotating component is rotatably arranged on the first holder, the first fixing member is mounted on the rotating component, and the first driving subcomponent is configured to drive the rotating component to rotate, so as to drive the first fixing member to rotate.

In this way, the first driving subcomponent can drive the first fixing member to rotate by driving the rotating component to rotate, so that the housing can rotate during laser cleaning.

In some embodiments, the first driving subcomponent is located on a side of the first fixing member that faces away from the second fixing member.

In this way, the first driving subcomponent can drive the first fixing member to rotate stably, and the first driving subcomponent and the second fixing member do not interfere with each other.

In some embodiments, the cleaning device comprises a second holder, wherein the second fixing member is rotatably connected to the second holder.

In this way, the second holder can be used to mount the second fixing member, and enables the second fixing member to rotate in any direction, so that the end cap can rotate in any direction.

In some embodiments, the cleaning device comprises a limiting member, wherein when the end cap is closed into the housing, the limiting member is arranged between the end cap and the housing for limiting a depth to which the end cap is closed into the housing.

In this way, by arranging the limiting member between the end cap and the housing, the depth to which the end cap is closed into the housing can be limited. In addition, the depth to which the end cap is closed into the housing can be adjusted by adjusting a width of the limiting member.

In some embodiments, the cleaning device comprises a guide member, wherein the limiting member is arranged on the guide member, and the guide member is configured to guide the end cap to be partially closed into the housing.

In this way, the guide member can guide the end cap to be partially closed into the housing.

In some embodiments, a guide channel is formed in the guide member, the guide channel is configured to guide the end cap to be closed into the housing, and the limiting member is arranged in the guide channel.

In this way, through the guide channel in the guide member, the end cap can be closed into the housing in a predetermined direction, so as to prevent the end cap from shaking in the process of closing into the housing, and ensure that the end cap can be aligned with the housing so that the end cap can be quickly closed into the housing.

In some embodiments, the guide member comprises a first portion and a second portion arranged spaced apart from the first portion, wherein the first portion and the second portion jointly define the guide channel.

In this way, the first portion and the second portion are arranged spaced apart from each other, so that the guide channel can have an adjustable width, and thus can be adapted to end caps and housings with different sizes, thereby improving the applicability of the guide member.

In some embodiments, the cleaning device comprises a guide driving component, wherein the guide driving component is configured to drive the guide member to move closer to or away from the end cap.

In this way, the guide driving component drives the guide member to move closer to or away from the end cap, so that the guide member can realize the limiting of the end cap relative to the housing before cleaning, and the guide member can be separated from the end cap and the housing after the limiting is completed, so as to perform subsequent laser cleaning.

In some embodiments, the cleaning device comprises a first pneumatic component, wherein the first pneumatic component is configured to introduce a gas into the housing through a filling port of the end cap.

In this way, by injecting the gas into the housing, a positive pressure can be formed inside the housing, so that the housing has an internal pressure greater than an external pressure, thereby effectively preventing dirt generated during laser cleaning or cleaned out from surfaces of the housing and the end cap from entering the housing, and further preventing potential safety hazards of the material.

In some embodiments, the cleaning device comprises a second pneumatic component, wherein the second pneumatic component is configured to suck pollutants formed by the laser assembly during operation.

In this way, the dirt generated during the laser cleaning or cleaned out from the surfaces of the housing and the end cap can be sucked by the second pneumatic component.

In some embodiments, the second pneumatic component comprises a sucking member surrounding the second fixing member, the sucking member is provided with a first sucking channel, a port of the first sucking channel faces the housing, and a negative pressure is formed in the first sucking channel.

In this way, the port of the first sucking channel faces the housing, so that the first sucking channel can effectively suck the dirt generated during the laser cleaning or cleaned out from the surfaces of the housing and the end cap.

In some embodiments, a second sucking channel configured to face the end cap is formed in the first fixing member, and the second pneumatic component is configured to form a negative pressure in the second sucking channel.

In this way, the second sucking channel is provided in the first fixing member, so that the second sucking channel can effectively suck the dirt generated during the laser cleaning or cleaned out from the surfaces of the housing and the end cap.

In some embodiments, the cleaning device further comprises a feeding assembly, wherein the feeding assembly is configured to fix the end cap when the end cap is separated from the housing.

In this way, the end cap can be fixed to the feeding assembly, so that the end cap does not fall off when separated from the housing. In addition, the feeding assembly can drive the end cap to move closer to or away from the housing, thereby realizing the snap fit between the housing and the end cap.

In some embodiments, the feeding assembly comprises a second mounting member and a second suction member fixed to the second mounting member, and the second suction member is configured to suck the end cap.

In this way, the end cap can be effectively fixed to the second suction member, thereby preventing the displacement of the end cap relative to the feeding assembly, and further enabling the end cap to be accurately positioned before being snap-fitted with the housing.

In some embodiments, the feeding assembly further comprises a positioning driving component connected to the second mounting member, and the positioning driving component is configured to drive the second mounting member to move closer to or away from the end cap.

In this way, the positioning driving assembly enables the second mounting member to move closer to or away from the end cap, such that the end cap can be sucked or released.

In some embodiments, the cleaning device further comprises an overturning driving component connected to the feeding assembly, wherein the overturning driving component is configured to drive the feeding assembly to rotate, so as to cause a surface of the end cap that is closed into the housing to face the housing.

In this way, the overturning driving component can drive the feeding assembly to rotate, thereby driving the end cap to rotate, and further enabling the end cap and the housing to be mutually positioned in a rotation direction.

In some embodiments, the cleaning device further comprises a pushing driving component connected to the feeding assembly, wherein the pushing driving component is configured to push the end cap to be partially closed into the housing when the surface of the end cap that is closed into the housing faces the housing.

In this way, the pushing driving component enables the end cap and the housing to be pre-assembled before being cleaned by laser.

In some embodiments, the material comprises a battery cell, the battery cell comprises an electrode assembly, and the electrode assembly is at least partially accommodated in the housing and is connected to the end cap via a tab; and the cleaning device comprises a shaping assembly configured to bend the tab into a predetermined state when the end cap is overturned relative to the housing.

In this way, the end cap can be connected to the housing via the tab. Further, the shaping assembly can bend the tab into the predetermined state, such that the tab is folded in the housing.

In some embodiments, the shaping assembly comprises an abutting member and an abutting driving component connected to the abutting member, wherein the abutting driving component is configured to drive the abutting member to move closer to or away from the electrode assembly, and when the abutting member moves closer to the electrode assembly, the abutting member is configured to abut against a pre-bent part of the tab during bending of the tab.

In this way, the abutting driving component can drive the abutting member to move closer to or away from the electrode assembly, such that the abutting member abuts against the pre-bent part of the tab, thereby enabling the tab connected to the electrode assembly to be bent, and further enabling the tab to be folded in the housing.

In some embodiments, the laser assembly comprises a laser head and a moving component, wherein the laser head is mounted on the moving component, and the moving component is capable of driving the laser head to move.

In this way, the movement of the laser head enables a pre-weld between the end cap and the housing and its nearby area to be cleaned omnidirectionally.

In some embodiments, the cleaning device further comprises a cap-closing driving component, wherein the cap-closing driving component is connected to the second fixing member, and the cap-closing driving component is configured to drive the second fixing member to move closer to or away from the first fixing member.

In this way, the cap-closing driving component is configured to drive the second fixing member to move closer to or away from the first fixing member, so that the end cap and the housing can be completely assembled together after being cleaned.

In a second aspect, the present application provides a production system, which comprises a cleaning device in the above embodiments. The production system further comprises a welding device located downstream of the cleaning device and configured to weld the housing to the end cap.

In this way, after the cleaning is completed, the housing and the end cap can be welded together, and the welding yield is high because there is no dirt during welding.

In a third aspect, the present application provides a cleaning method for cleaning a material. The material comprises a housing and an end cap. The cleaning method comprises: fixing the housing; fixing the end cap, and partially closing the end cap into the housing; and cleaning the housing and the end cap by laser.

In this way, the housing and the end cap can be effectively cleaned by a laser cleaning device when they are fixed.

In some embodiments, the cleaning method further comprises: pushing the end cap toward the housing so as to partially close the end cap into the housing.

In this way, the housing and the end cap can be partially assembled together before being cleaned.

In some embodiments, the cleaning method further comprises: causing a surface of the end cap that is closed into the housing to face the housing.

In this way, the end cap can be assembled to the housing by means of overturning.

In some embodiments, the material comprises an electrode assembly, and the electrode assembly is at least partially accommodated in the housing and is connected to the end cap via a tab; and the causing a surface of the end cap that is closed into the housing to face the housing comprises: using an abutting member to abut against a pre-bent part of the tab; and causing the surface of the end cap that is closed into the housing to face the housing when the abutting member abuts against the pre-bent part.

In this way, the abutting member abuts against the pre-bent part of the tab, thereby enabling the tab connected to the electrode assembly to be bent, and further enabling the tab to be folded in the housing.

In some embodiments, the pushing the end cap toward the housing so as to partially close the end cap into the housing comprises: placing a limiting member between the end cap and the housing; and pushing the end cap to abut the end cap against the limiting member so as to partially close the end cap into the housing.

In this way, the limiting member is placed between the end cap and the housing, and the end cap is pushed to abut same against the limiting member so as to partially close the end cap into the housing, so that the depth to which the end cap is closed into the housing can be adjusted to reserve a laser cleaning area before welding.

In some embodiments, the cleaning the housing and the end cap by laser comprises: rotating the housing and the end cap synchronously; and emitting laser light to the housing and the end cap to clean the housing and the end cap.

In this way, the synchronous rotation of the housing and the end cap can prevent the housing and the end cap from being damaged due to relative displacement after assembly, and using laser to clean the housing and the end cap can clean out the dirt having strong adhesion to the surfaces of the housing and the end cap, so that a better cleaning effect is provided.

In some embodiments, the cleaning method further comprises: introducing a gas into the housing through a filling port of the end cap.

In this way, by introducing the gas into the housing, a positive pressure can be formed inside the housing, so that the housing has an internal pressure greater than an external pressure, thereby effectively preventing dirt generated during laser cleaning or cleaned out from surfaces of the housing and the end cap from entering the housing, and further preventing potential safety hazards of the material.

In some embodiments, the cleaning method further comprises: sucking pollutants around the housing when the housing and the end cap are being cleaned.

In this way, sucking the pollutants around the housing can prevent the dirt from reaching a welding area under the driving of an external environment during or after cleaning to cause poor welding.

In some embodiments, the cleaning method further comprises: completely closing the end cap into the housing after the housing and the end cap are cleaned.

In this way, the end cap can be completely closed into the housing after being cleaned, so that connection parts of the end cap and the housing can be welded subsequently.

In a fourth aspect, the present application provides a battery, which is manufactured by using a cleaning method in the above embodiments.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become obvious to those of ordinary skill in the art upon reading the following detailed description of preferred implementations. Accompanying drawings are merely for the purpose of illustrating the preferred implementations and are not to be construed as limiting the present application. Moreover, like components are denoted by like reference signs throughout the accompanying drawings. In the drawings:
FIG. 1 is a schematic diagram of a structure of a cleaning device according to some embodiments of the present application;
FIG. 2 is a schematic diagram of a structure of a cleaning device according to some embodiments of the present application;
FIG. 3 is a schematic exploded view of a cleaning device according to some embodiments of the present application;
FIG. 4 is a schematic diagram of a structure of a housing clamped by clamping members according to some embodiments of the present application;
FIG. 5 is a schematic diagram of a partial structure of a cleaning device according to some embodiments of the present application;
FIG. 6 is a schematic diagram of a partial structure of a cleaning device according to some embodiments of the present application;
FIG. 7 is a schematic exploded view of a partial structure of a cleaning device according to some embodiments of the present application;
FIG. 8 is a schematic diagram of a limiting member limiting a material according to some embodiments of the present application;
FIG. 9 is a schematic diagram of a partial structure of a cleaning device according to some embodiments of the present application;
FIG. 10 is a schematic diagram of a partial structure of a cleaning device and a material according to some embodiments of the present application;
FIG. 11 is a schematic diagram of a structure of a second pneumatic component according to some embodiments of the present application;
FIG. 12 is a schematic diagram of a tab of a battery cell before being folded according to some embodiments of the present application;
FIG. 13 is a schematic diagram of a production system according to some embodiments of the present application;
FIG. 14 is a schematic diagram of a state process according to some embodiments of the present application;
FIG. 15 is a schematic flowchart of a cleaning method according to some embodiments of the present application;
FIG. 16 is a schematic flowchart of a cleaning method according to some embodiments of the present application;
FIG. 17 is a schematic diagram of a state process according to some embodiments of the present application;
FIG. 18 is a schematic flowchart of a cleaning method according to some embodiments of the present application;
FIG. 19 is a schematic flowchart of a cleaning method according to some embodiments of the present application;
FIG. 20 is a schematic diagram of a folded tab of a battery cell according to some embodiments of the present application;
FIG. 21 is a schematic flowchart of a cleaning method according to some embodiments of the present application;
FIG. 22 is a schematic flowchart of a cleaning method according to some embodiments of the present application;
FIG. 23 is a schematic flowchart of a cleaning method according to some embodiments of the present application;
FIG. 24 is a schematic flowchart of a cleaning method according to some embodiments of the present application;
FIG. 25 is a schematic diagram of a state process according to some embodiments of the present application;
FIG. 26 is a schematic flowchart of a cleaning method according to some embodiments of the present application; and
FIG. 27 is a schematic diagram of a structure of a battery according to some embodiments of the present application.

### Reference Signs in Detailed Description of Embodiments:

Cleaning device 100; Material 200; Housing 210; End cap 220; First fixing member 10; Second fixing member 20; Laser assembly 30; Clamping member 11; Clamping driving component 40; First mounting member 21; First suction member 22; Protective shell 50; Rotation driving component 60; First driving subcomponent 61; Second driving subcomponent 62; First holder 70; Rotating component 80; Second holder 90; Limiting member 101; Guide member 102; Guide channel 1021; First portion 1022; Second portion 1023; Guide driving component 103; First pneumatic component 104; Filling port 221; Second pneumatic component 105; Sucking member 1051; First sucking channel 10511; Second sucking channel 12; Feeding assembly 106; Second mounting member 1061; Second suction member 1062; Positioning driving component 1063; Overturning driving component 107; Pushing driving component 108; Electrode assembly 230; Tab 2301; Shaping assembly 109; Abutting member 1091; Abutting driving component 1092; Laser head 31; Moving component 32; Cap-closing driving component 110; Production system 1000; Welding device 300; Battery 400.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "j" herein generally indicates an "or" relationship between the associated objects.

In the description of the embodiments of the present application, the term "a plurality of' means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

The inventors have noticed that poor welding, such as false welding, is likely to occur during assembly of materials for producing batteries, thereby increasing the production and manufacturing costs. In addition, once products subjected to poor welding enter the market, it would lead to safety accidents. Taking an example in which a material is a battery cell, specifically, during manufacturing of the battery cell of a battery, an end cap, an electrode assembly and a housing of the battery cell need to be assembled together. Specifically, it is necessary to weld the end cap to the housing for the electrode assembly. However, the end cap, the electrode assembly and the housing are assemblies produced in different production lines, so before welding, the end cap, the electrode assembly and the housing must be cleaned to prevent defects caused by dirt on surfaces of the above assemblies during assembly.

In order to solve the problem of poor welding, the inventors have found that before welding, the surfaces of the electrode assembly, the housing and the end cap can be physically cleaned by using a cleaning tool such as a brush. For example, the surface of the electrode assembly, the surface of the housing and an upper surface of the end cap are physically cleaned by using a cleaning tool such as a brush before the electrode assembly is mounted in the housing. However, this method can only be used to clean the electrode assembly, the housing and the end cap separately before the electrode assembly is mounted in the housing and the end cap covers the housing, but cannot effectively remove scratches caused when the electrode assembly is mounted in the housing and pollutants caused in the process of welding the end cap to the housing. In addition, the cleaning tool such as the brush can only be used for simple physical cleaning, but can neither effectively remove pollutants having strong adhesion such as an adhesive and oil stains, nor thoroughly solve the problem of poor welding between the housing and the end cap caused by pollution.

Based on the above considerations, to solve the problem of poor welding between the housing for the electrode assembly and the end cap, the inventors have designed a cleaning device through in-depth research. When the end cap is partially closed into the housing for the electrode assembly, a part to be welded between the housing and the end cap and its nearby area are cleaned by laser, so that the dirt in a welding area between the housing for the electrode assembly and the end cap can be cleaned out quickly and efficiently in a process, thereby effectively solving the poor welding between the housing for the electrode assembly and the end cap.

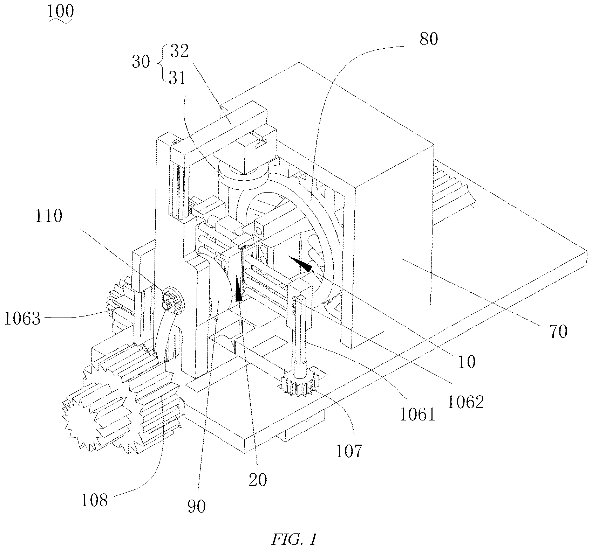

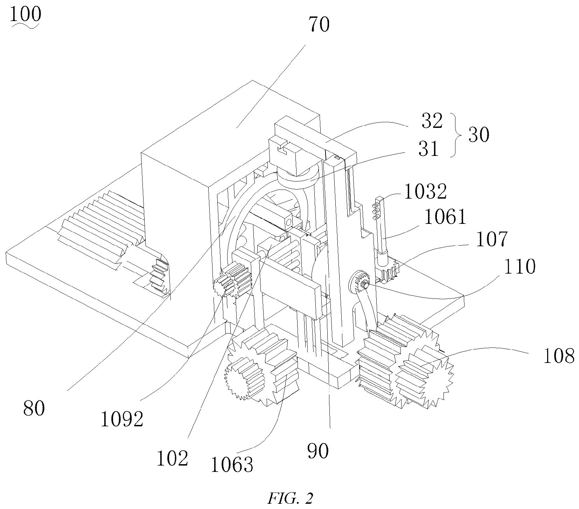

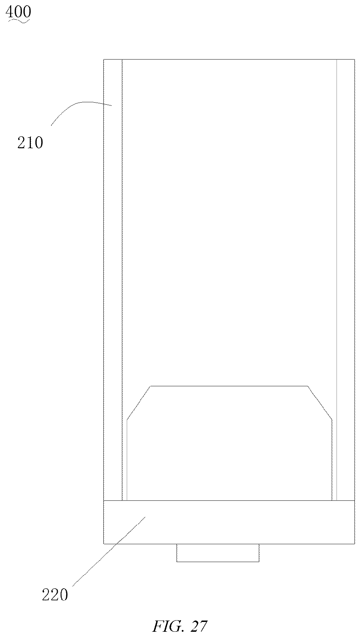

Referring to FIGS. 1 and 2, FIG. 1 is a schematic diagram of a structure of a cleaning device 100 according to some embodiments of the present application, and FIG. 2 is a schematic diagram of a structure of a cleaning device 100 according to some embodiments of the present application. The cleaning device 100 disclosed in the embodiments of the present application can be used for production and manufacture of batteries (as shown in FIG. 27). The cleaning device 100 may also be used for production and manufacture of other similar structures, such as production and manufacture of consumer electronic products, household appliances, watches and clocks, etc.

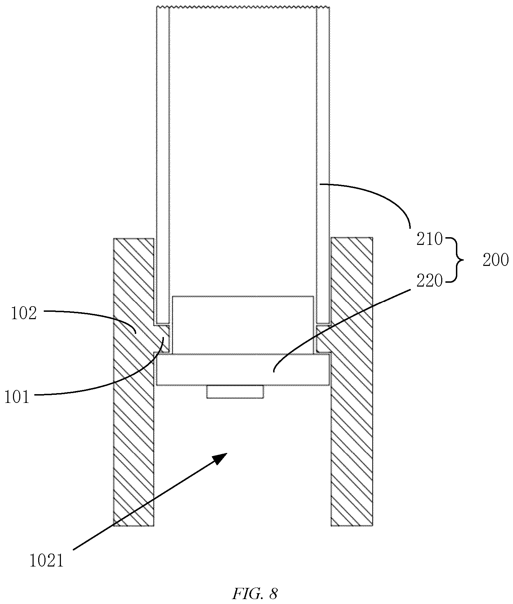

According to some embodiments of the present application, a cleaning device 100 for cleaning a material 200 is provided. The material 200 comprises a housing 210 and an end cap 220 (as shown in FIG. 8). The cleaning device 100 comprises a first fixing member 10, a second fixing member 20, and a laser assembly 30. The first fixing member 10 is configured to fix the housing 210; the second fixing member 20 is arranged opposite to the first fixing member 10 and is configured to fix the end cap 220; and the laser assembly 30 is arranged on a side of the first fixing member 10 and a side of the second fixing member 20, and is configured to clean the housing 210 and the end cap 220 when the end cap 220 is partially closed into the housing 210.

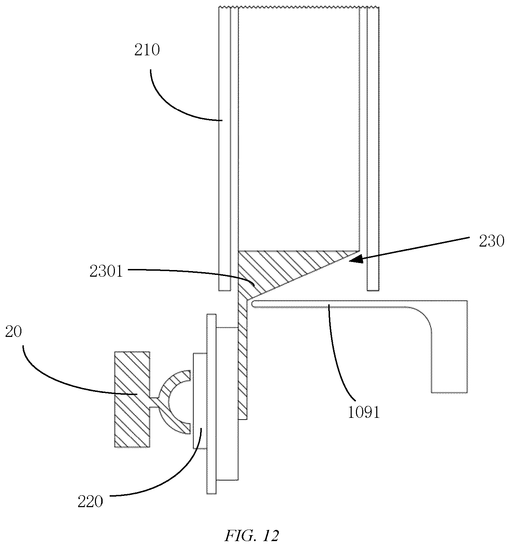

Specifically, the cleaning device 100 is a device that uses the laser assembly 30 as a cleaning tool, and the cleaning device 100 can omnidirectionally clean an object to be cleaned. The material 200 may be, for example, a battery cell or a battery pack. The specific type of material 200 is not limited in the present application. The material 200 may comprise an end cap 220, a housing 210, an electrode assembly 230 (as shown in FIG. 12), and other functional components. The material 200 may be in the form of a cylinder, a flat body, a rectangular cuboid, or the like. That is, the end cap 220 and the housing 210 of the material 200 may be in the form of a cylinder, a flat body, a rectangular cuboid, or the like after being assembled.

The end cap 220 refers to a component that covers an opening of the housing 210 to isolate an internal environment of the material 200 from an external environment. Without limitation, the end cap 220 may be shaped to adapt to the shape of the housing 210 so as to cooperate with the housing 210. Optionally, the end cap 220 may be made of a material (for example, an aluminum alloy) with a certain hardness and strength. In this way, the end cap 220 is less prone to deformation when subjected to compression and collision, so that the material 200 can have a higher structural strength and the safety performance can also be improved. The end cap 220 may be made of various materials, such as copper, iron, aluminum, stainless steel, an aluminum alloy, and plastic, which is not specifically limited in embodiments of the present application.

The housing 210 is an assembly that is configured to cooperate with the end cap 220 to form the internal environment of the material 200. The internal environment formed may be used for accommodating the electrode assembly 230 and other components. The housing 210 and the end cap 220 may be separate components, and the housing 210 may be provided with an opening, at which the end cap 220 covers the opening to form the internal environment of the material 200. The housing 210 may have various shapes and various sizes, for example, in the form of a rectangular cuboid, a cylinder, a hexagonal prism, etc. Specifically, the housing 210 may be shaped depending on the specific shape and size of the electrode assembly 230. The housing 210 may be made of various materials, such as copper, iron, aluminum, stainless steel, an aluminum alloy, and plastic, which is not particularly limited in embodiments of the present application.

The first fixing member 10 may be a part for fixing the housing 210 of the material 200. The first fixing member 10 may be configured to fix the housing 210 of various shapes described above, and the housing 210 does not shake when fixed to the first fixing member 10. In other words, the first fixing member 10 can limit all the degrees of freedom of the housing 210, the first fixing member 10 can limit displacement of the housing 210 relative to the first fixing member 10, and the housing 210 can move synchronously with the first fixing member 10.

The second fixing member 20 may be a part for fixing the end cap 220. The second fixing member 20 may be configured to fix the end cap 220 of various shapes described above, and the end cap 220 does not shake when fixed to the second fixing member 20. In other words, the second fixing member 20 can limit all the degrees of freedom of the end cap 220, the second fixing member 20 can limit displacement of the end cap 220 relative to the second fixing member 20, and the end cap 220 can move synchronously with the second fixing member 20. The second fixing member 20 may be arranged opposite to the first fixing member 10 to prevent interference with the first fixing member 10, and facilitate pre-positioning of the end cap 220 and the housing 210 during assembly.

The laser assembly 30 may comprise any type of laser, and the laser may be available in the market or customized, which is not limited in the present application. The laser assembly 30 may be arranged on a side of the first fixing member 10 and a side of the second fixing member 20 to prevent interference with the first fixing member 10 and the second fixing member 20, and facilitate the cleaning of the housing 210 and the end cap 220. Further, before welding, the laser assembly 30 may thoroughly clean the welding area between the housing 210 and the end cap 220, including but not limited to oil stains, dust, an adhesive, etc. in this area.

The complete closing of the end cap 220 into the housing 210 occurs when the end cap 220 is pushed into the housing 210 and abuts against the opening of the housing 210 after the end cap 220 and the housing 210 are cleaned by laser, and "partial closing" means that the end cap 220 has not been completely closed into the housing 210, but at a moment during the pushing of the end cap 220 into the housing 210.

In the cleaning device 100 according to the embodiments of the present application, the housing 210 of the material 200 is fixed by the first fixing member 10, and the end cap 220 is fixed by the second fixing member 20; in addition, the laser assembly 30 is arranged on the side of the first fixing member 10 and the side of the second fixing member 20. With such a design, the material 200 can be cleaned before welding, so that dirt generated during assembly of the housing 210 and the end cap 220 can be effectively prevented from entering the housing 210, and dust generated during laser cleaning can be effectively prevented from entering the material 200, thereby effectively solving the pollution defect in the welding of the end cap 220 to the housing 210, and further improving the yield of welding the end cap 220 to the housing 210.

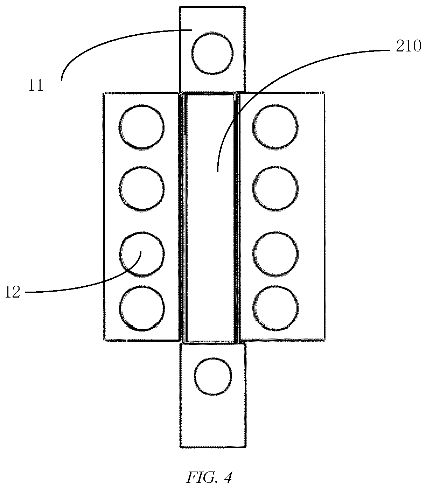

According to some embodiments of the present application, optionally, referring further to FIGS. 1 and 4, FIG. 4 is a schematic diagram of a structure of a housing 210 clamped by clamping members 11 according to some embodiments of the present application. The first fixing member 10 comprises a plurality of clamping members 11. The plurality of clamping members 11 jointly clamp the housing 210.

Specifically, the plurality of clamping members 11 may be configured to clamp the housing 210 of various shapes, and the plurality of clamping members 11 can stably fix the housing 210 between the clamping members 11. Further, the plurality of clamping members 11 may clamp an outer surface of the housing 210, and the clamping members 11 each may be provided with a material such as a sponge to increase friction, or roughness of connections between the clamping members 11 and the housing 210 can be increased, such that the clamping members 11 and the housing 210 cannot be displaced or overturned in any direction.

In this way, with the arrangement of the clamping members 11, the housing 210 can be moved smoothly when being cleaned.

Of course, in other implementations, the first fixing member 10 may fix the housing 210 by means of suction or the like, and the method in which the first fixing member 10 fixes the housing 210 is not limited in the present application.

According to some embodiments of the present application, optionally, referring further to FIGS. 1 and 4, FIG. 4 is a schematic diagram of a structure of a housing 210 clamped by clamping members 11 according to some embodiments of the present application. The plurality of clamping members 11 are arranged in a circumferential direction of the housing 210.

The circumferential direction of the housing 210 may be a direction around a lengthwise central axis of the housing 210. In the circumferential direction of the housing 210, the housing 210 has a contour of a large area and is easy to be clamped by the clamping members 11 without shaking. The plurality of clamping members 11 may be arranged at any interval or at a fixed interval in the circumferential direction of the housing 210. When the plurality of clamping members 11 are arranged at a fixed interval in the circumferential direction of the housing 210, the housing 210 can be stably clamped by a minimum number of clamping members 11, so as to reduce the production and manufacturing costs.

In this way, when the plurality of clamping members 11 are arranged in the circumferential direction of the housing 210, there is a larger clamped area of the housing 210, and the housing 210 can be clamped more stably, thereby facilitating subsequent assembly.

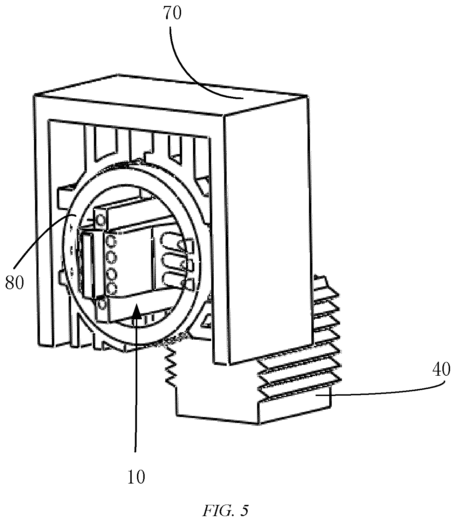

According to some embodiments of the present application, optionally, referring further to FIGS. 1 and 5, FIG. 5 is a schematic diagram of a partial structure of a cleaning device 100 according to some embodiments of the present application. A clamping driving component 40 drives the plurality of clamping members 11 to move closer to or away from each other.

Specifically, the clamping driving component 40 may be a device for driving the clamping members 11, and the clamping driving component 40 may be an electric motor, an air cylinder, or the like, which is not limited herein in the present application, provided that the plurality of clamping members 11 can be driven to move closer to or away from each other. Further, the clamping driving component 40 can drive the clamping members 11 to move closer to or away from each other, such that the clamping members 11 can be compatible with housings 210 of different shapes, and the housing 210 can be easily disassembled after being clamped. For example, when the housing 210 has a small radial dimension, the clamping driving component 40 can drive the plurality of clamping member 11 to move closer to each other. When the housing 210 has a large radial dimension, the clamping driving component 40 can drive the plurality of clamping member 11 to move away from each other. The clamping driving component 40 is, for example, a component comprising an air cylinder.

In this way, the clamping driving component 40 can control the clamping members 11 to clamp housings 210 with different contour shapes, so that the design of the clamping members 11 is universal.

According to some embodiments of the present application, optionally, referring further to FIGS. 1, 5 and 6, FIG. 6 is a schematic diagram of a partial structure of a cleaning device 100 according to some embodiments of the present application. The second fixing member 20 comprises a first mounting member 21 and a first suction member 22 fixed to the first mounting member 21, and the first suction member 22 is configured to suck the end cap 220.

Specifically, the first mounting member 21 may be a part for mounting the first suction member 22, the first mounting member 21 limits all the degrees of freedom of the first suction member 22, and the first suction member 22 may move with the first mounting member 21. The first suction member 22 can suck the end cap 220 and limit all the degrees of freedom of the end cap 220, and the first suction member 22 can stably suck the end cap 220, such that the end cap 220 would not fall off during assembly.

Without limitation, the first suction member 22 may be an element in various structural forms. For example, the first suction member 22 may be an element for sucking by means of a gas, an element for attracting by means of a magnetic force, or the like.

Optionally, the first mounting member 21 can push the end cap 220 to be fully snap-fitted with the housing 210 after the cleaning is completed.

Of course, in other implementations, the second fixing member 20 may fix the end cap 220 by means of clamping or the like.

In this way, the end cap 220 can be sucked on the first suction member 22, so that the end cap 220 can be stably fixed, thereby ensuring the cleaning effect.

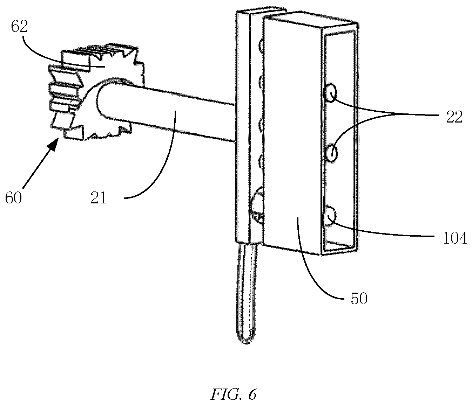

According to some embodiments of the present application, optionally, referring further to FIGS. 1 and 6, the cleaning device 100 further comprises a protective shell 50 arranged on the first mounting member 21. The first suction member 22 is located in the protective shell 50, and the protective shell 50 is configured to cover at least part of an outer surface of the end cap 220.

Specifically, the protective shell 50 may be a shell for shielding laser light, and the protective shell 50 may be made of a material that cannot be melted by the laser light emitted by the laser assembly 30, so that the protective shell 50 can prevent the laser light from directly irradiating a non-welding area of the end cap 220 during cleaning, thereby avoiding damaging components on the end cap 220.

The first suction member 22 may be arranged inside the protective shell 50, and the first suction member 22 may be connected to the protective shell 50 by means of any form of connection, which is not limited herein in the implementations of the present application. By "at least part of an outer surface of the end cap 220" refers to the non-welding area of the end cap 220.

In this way, the first suction member 22 can prevent the end cap 220 from shaking during the cleaning, and the protective shell 50 can prevent the end cap 220 from being damaged by laser.

According to some embodiments of the present application, optionally, referring further to FIGS. 1, 5 and 6, the cleaning device 100 further comprises a rotation driving component 60. The rotation driving component 60 is configured to drive the first fixing member 10 and the second fixing member 20 to rotate, or to drive the laser assembly 30 to rotate.

Specifically, the rotation driving component 60 may be a component that drives the first fixing member 10, the second fixing member 20 or the laser assembly 30 to rotate. In other words, in some implementations, the rotation driving component 60 may drive the first fixing member 10 and the second fixing member 20 to rotate. In some other implementations, the rotation driving component 60 may drive the laser assembly 30 to rotate.

The rotation driving component 60 may drive the first fixing member 10, the second fixing member 20 or the laser assembly 30 to rotate in any direction, for example, to perform axial overturning, radial overturning, or the like. The rotation driving component 60 is, for example, a component comprising an electric motor. In other words, the rotation driving component 60 may drive the first fixing member 10, the second fixing member 20 or the laser assembly 30 to rotate by means of the electric motor. The rotation of the first fixing member 10 and the second fixing member 20 may be that the first fixing member 10 drives the second fixing member 20 to rotate, or the second fixing member 20 drives the first fixing member 10 to rotate, or the first fixing member 10 and the second fixing member 20 rotate simultaneously, which is not limited in the implementations of the present application.

In this way, the rotation driving component 60 enables the end cap 220 and the housing 210 to be cleaned omnidirectionally.

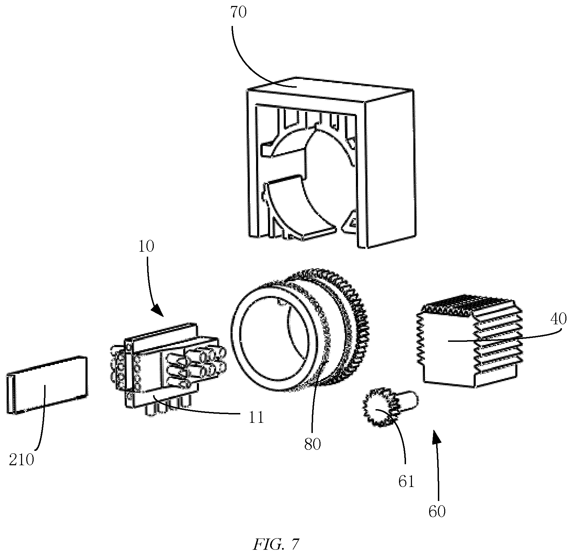

According to some embodiments of the present application, optionally, referring further to FIGS. 6 and 7, FIG. 7 is a schematic exploded view of a partial structure of a cleaning device 100 according to some embodiments of the present application. The rotation driving component 60 comprises a first driving subcomponent 61 and a second driving subcomponent 62. The first driving subcomponent 61 is configured to drive the first fixing member 10 to rotate, and the second driving subcomponent 62 is configured to drive the second fixing member 20 to rotate.

Specifically, the first driving subcomponent 61 may be a component that drives the first fixing member 10 to rotate, and the second driving subcomponent 62 may be a component that drives the second fixing member 20 to rotate. The first driving subcomponent 61 may drive the first fixing member 10 to rotate in any direction, for example, to perform axial translation, radial translation and overturning, or the like, so as to drive the housing 210 to rotate in any direction. The second driving subcomponent 62 may drive the second fixing member 20 to rotate in any direction, for example, to perform axial overturning, radial overturning, or the like, so as to drive the end cap 220 to rotate in any direction.

The first driving subcomponent 61 and the second driving subcomponent 62 each are, for example, a component comprising an electric motor. In other words, the first fixing member 10 and the second fixing member 20 may be driven by the electric motor to rotate.

In this way, the first driving subcomponent 61 and the second driving subcomponent 62 can respectively drive the first fixing member 10 and the second fixing member 20 to rotate, facilitating the control of rotation of the first fixing member 10 and the second fixing member 20, thereby realizing omnidirectional cleaning of the housing 210 and the end cap 220.

According to some embodiments of the present application, optionally, referring further to FIG. 1, the first fixing member 10 and the second fixing member 20 rotate synchronously.

Specifically, the first fixing member 10 and the second fixing member 20 may have the same rotation direction and rotation angle. For example, when the first fixing member 10 rotates by 45° clockwise, the second fixing member 20 rotates by 45° clockwise synchronously. It should be noted that the above angle is only illustrative, and cannot be regarded as limitations on the implementations of the present application. In this way, the housing 210 and the end cap 220 can be pre-positioned during assembly to prevent interference during assembly.

In this way, by using the first fixing member 10 and the second fixing member 20, the housing 210 and the end cap 220 cannot be deformed when being cleaned, and the first fixing member 10 and the second fixing member 20 can be cleaned synchronously, thereby improving the cleaning efficiency.

According to some embodiments of the present application, optionally, referring further to FIG. 1, the cleaning device 100 comprises a first holder 70 and a rotating component 80. The rotating component 80 is rotatably arranged on the first holder 70, the first fixing member 10 is mounted on the rotating component 80, and the first driving subcomponent 61 is configured to drive the rotating component 80 to rotate, so as to drive the first fixing member 10 to rotate.

Specifically, the first holder 70 may be a part for mounting the rotating component 80, and the first holder 70 may be made of a material with high strength. The first holder 70 may be configured as a corresponding structure according to a mounting structure of the rotating component 80, but the specific structure of the first holder 70 is not limited in the present application. The rotating component 80 may be a component that can rotate about its own axis. The rotating component 80 may be rotatably connected to the first holder 70 via a connecting member such as a bearing. The first fixing member 10 may be connected to the rotating component 80 by means of bolted connection, and the specific method for mounting the first fixing member 10 to the rotating component 80 is not limited in the implementations of the present application. The first driving subcomponent 61 may drive the rotating component 80 to rotate in any direction, for example, to perform axial overturning, radial overturning, or the like, so as to drive the first fixing member 10 to rotate, thereby driving the housing 210 to rotate. The transmission between the first driving subcomponent 61 and the driven rotating component 80 can be performed by means of gear drive, or by means of belt drive, worm drive, etc., which is not limited herein in the present application, provided that the first driving subcomponent 61 can drive the rotating component 80 to rotate in any direction.

In this way, the first driving subcomponent 61 can drive the first fixing member 10 to rotate by driving the rotating component 80 to rotate, so that the housing 210 can rotate during laser cleaning.

According to some embodiments of the present application, optionally, referring further to FIGS. 1 and 7, the first driving subcomponent 61 is located on a side of the first fixing member 10 that faces away from the second fixing member 20.

Specifically, the first driving subcomponent 61 is arranged close to the first fixing member 10. With such an arrangement, there is a shorter arm of force when the first fixing member 10 is driven to rotate, and a torque can be transmitted more stably. In addition, the first driving subcomponent 61 does not occupy a space on a side of the second fixing member 20, and the structural design is more reasonable.

In this way, the first driving subcomponent 61 can drive the first fixing member 10 to rotate stably, and the first driving subcomponent 61 and the second fixing member 20 do not interfere with each other.

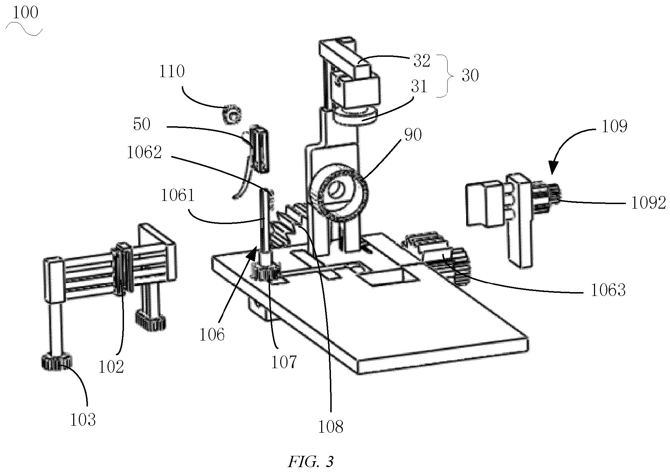

According to some embodiments of the present application, optionally, referring further to FIGS 1 and 3, the cleaning device 100 comprises a second holder 90. The second fixing member 20 is rotatably connected to the second holder 90. The second holder 90 may be a part for mounting the second fixing member 20, and the second holder 90 may be made of a material with high strength. The second holder 90 may be configured as a corresponding structure according to a mounting structure of the second fixing member 20, but the specific structure of the second holder 90 is not limited in the present application.

Specifically, the second holder 90 may be a component for mounting the second fixing member 20, and the second holder 90 may be rotatably connected to the second fixing member 20 via a gear, a bearing, etc. The specific method for mounting the second holder 90 and the second fixing member 20 is not limited in the implementations of the present application. The second fixing member 20 may rotate in any direction relative to the second holder 90, for example, perform axial overturning, radial overturning, or the like.

In this way, the second holder 90 can be used to mount the second fixing member 20, and enables the second fixing member 20 to rotate in any direction, so that the end cap 220 can rotate in any direction.

According to some embodiments of the present application, optionally, referring further to FIGS. 1 and 8, FIG. 8 is a schematic diagram of a limiting member 101 limiting a material 200 according to some embodiments of the present application. The cleaning device 100 comprises a limiting member 101, and when the end cap 220 is closed into the housing 210, the limiting member 101 is arranged between the end cap 220 and the housing 210, for limiting a depth to which the end cap 220 is closed into the housing 210.

Optionally, the limiting member 101 may be a part that can limit the depth to which the end cap 220 is closed into the housing 210, and the limiting member 101 may be made of a material having deformation resistance. When the limiting member 101 abuts against the end cap 220 and the housing 210, the limiting member 101 would not be deformed, thereby ensuring the positioning accuracy of the limiting member 101.

When the end cap 220 is closed into the housing 210, the limiting member 101 may be arranged between the end cap 220 and the housing 210. Further, the limiting member 101 may separate welding areas of the end cap 220 and the housing 210 from each other. By "a depth to which the end cap 220 is closed into the housing 210" refers to a distance by which the end cap 220 cooperates with the housing 210 during assembly, and the distance may be limited by a width of the limiting member 101.

In this way, by arranging the limiting member 101 between the end cap 220 and the housing 210, the depth to which the end cap 220 is closed into the housing 210 can be limited. In addition, the depth to which the end cap 220 is closed into the housing 210 can be adjusted by adjusting the width of the limiting member 101.

According to some embodiments of the present application, optionally, referring further to FIG. 8, the cleaning device 100 comprises a guide member 102. The limiting member 101 is arranged on the guide member 102, and the guide member 102 is configured to guide the end cap 220 to be partially closed into the housing 210.

Specifically, the guide member 102 may be a component for guiding the movement of the end cap 220, and the guide member 102 may push the housing 210 when the housing and the end cap 220 begin to move closer to each other. When the end cap 220 is partially closed into the housing 210, the limiting member 101 arranged on the guide member 102 is used to restrain the end cap 220 from continuing to be closed into the housing 210. In this case, the process of closing the end cap 220 into the housing 210 is stopped, the guide member 102 drives the limiting member 101 to move away from the housing 210 and the end cap 220, and surfaces of the end cap 220 and the housing 210 present areas to be cleaned. The limiting member 101 may be connected to the guide member 102 by means of bolted connection, and the specific method for mounting the limiting member 101 and the guide member 102 is not limited in the implementations of the present application.

Optionally, the guide member 102 may be configured as a component having two portions, and the guide member 102 may abut against the limiting member 101 in a thickness direction of the limiting member 101.

In this way, the end cap 220 is guided to be partially closed into the housing 210.

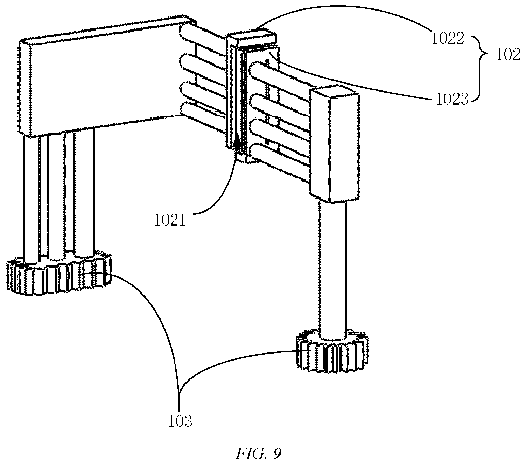

According to some embodiments of the present application, optionally, referring further to FIGS. 8 and 9, FIG. 9 is a schematic diagram of a partial structure of a cleaning device 100 according to some embodiments of the present application. A guide channel 1021 is formed in the guide member 102, the guide channel 1021 is configured to guide the end cap 220 to be closed into the housing 210, and the limiting member 101 is arranged in the guide channel 1021.

Specifically, the guide channel 1021 has a certain width and depth, and the guide channel 1021 can fix the position of the limiting member 101, so as to guide the distance by which the end cap 220 is closed into the housing 210.

In this way, through the guide channel 1021 in the guide member 102, the end cap 220 can be closed into the housing 210 in a predetermined direction, so as to prevent the end cap 220 from shaking in the process of closing into the housing 210, and ensure that the end cap 220 can be aligned with the housing 210 so that the end cap 220 can be quickly closed into the housing 210.

According to some embodiments of the present application, optionally, referring further to FIG. 9, the guide member 102 comprises a first portion 1022 and a second portion 1023 arranged spaced apart from the first portion 1022. The first portion 1022 and the second portion 1023 jointly define the guide channel 1021.

Specifically, the first portion 1022 and the second portion 1023 may be components of the guide member 102 that are configured to be in direct contact with the limiting member 101, and a certain distance should be provided between the first portion 1022 and the second portion 1023. By adjusting this distance, the guide member 102 can match limiting members 101 with different thicknesses, so as to adjust the width to which the end cap 220 is closed into the housing 210. A guide channel 1021 may be formed between the first portion 1022 and the second portion 1023. In other words, a gap between the first portion 1022 and the second portion 1023 is the guide channel 1021, and the first portion 1022 and the second portion 1023 may change the size of the guide channel 1021 by moving away from or closer to each other.

In this way, the first portion 1022 and the second portion 1023 are arranged spaced apart from each other, so that the guide channel 1021 can have an adjustable width, and thus can be adapted to end caps 220 and housings 210 with different sizes, thereby improving the applicability of the guide member 102.

According to some embodiments of the present application, optionally, referring further to FIG. 9, the cleaning device 100 further comprises a guide driving component 103. The guide driving component 103 is configured to drive the guide member 102 to move closer to or away from the end cap 220.

Specifically, the guide driving component 103 may be a component configured to drive the guide member 102 to move closer to or away from the end cap 220. The guide driving component 103 may drive the guide member 102 to move in any direction, and the guide member 102 may be fixed to the guide driving component 103 by means of bolted connection. The connection of the guide member 102 to the guide member 102 by means of bolted connection is not limited in the implementations of the present application, and the specific method for mounting the second holder 90 and the second fixing member 20 is not limited in the implementations of the present application. The guide driving component 103 is, for example, a component comprising an air cylinder and a screw motor.

In this way, the guide driving component 103 drives the guide member 102 to move closer to or away from the end cap 220, so that the guide member 102 can realize the limiting of the end cap 220 relative to the housing 210 before cleaning, and the guide member 102 can be separated from the end cap 220 and the housing 210 after the limiting is completed, so as to perform subsequent laser cleaning.

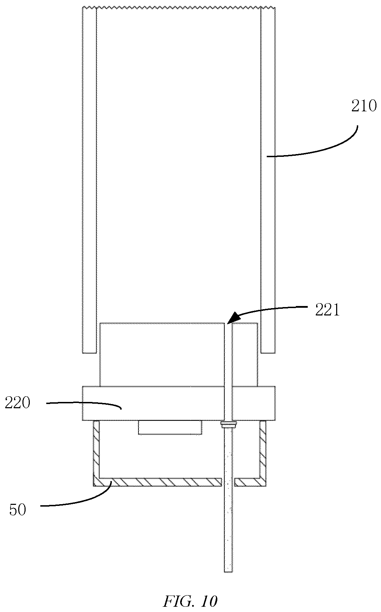

According to some embodiments of the present application, optionally, referring further to FIGS. 6, 8 and 10, FIG. 10 is a schematic diagram of a partial structure of a cleaning device 100 and a material 200 according to some embodiments of the present application. The cleaning device 100 comprises a first pneumatic component 104. The first pneumatic component 104 is configured to introduce a gas into the housing 210 through a filling port 221 of the end cap 220.

Specifically, the first pneumatic component 104 may be a component configured to increase a local gas pressure, and the first pneumatic component 104 may form a positive pressure in a chamber structure. The end cap 220 may comprise the filling port 221. The filling port 221 may be a through hole penetrating in a thickness direction of the end cap 220, and the first pneumatic component 104 may be in communication with the interior of the housing 210 through the filling port 221. Further, when the end cap 220 is partially closed into the housing 210, the first pneumatic component 104 may extend into the housing 210 through the filling port 221 and introduce air. It may be understood that when the end cap 220 is partially closed into the housing 210, a chamber may be formed between the end cap 220 and the housing 210. In this case, the first pneumatic component 104 introduces air into the chamber, so that a positive pressure can be formed in the chamber relative to the outside of the chamber.

In this way, by injecting the gas into the housing 210, a positive pressure can be formed inside the housing 210, so that the housing 210 has an internal pressure greater than an external pressure, thereby effectively preventing dirt generated during laser cleaning or cleaned out from surfaces of the housing 210 and the end cap 220 from entering the housing 210, and further preventing potential safety hazards of the material 200.

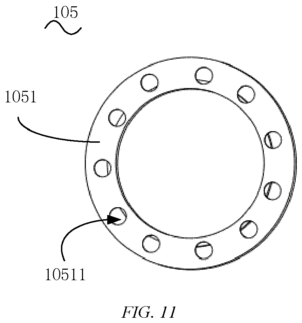

According to some embodiments of the present application, optionally, referring further to FIGS. 8 and 11, FIG. 11 is a schematic diagram of a structure of a second pneumatic component 105 according to some embodiments of the present application. The cleaning device 100 comprises a second pneumatic component 105. The second pneumatic component 105 is configured to suck pollutants formed by the laser assembly 30 during operation.

Specifically, the second pneumatic component 105 may be a component that forms a negative pressure around itself. The second pneumatic component 105 may be arranged close to the welded areas of the housing 210 and the end cap 220. The second pneumatic component 105 may be started before the laser assembly 30 starts cleaning. Alternatively, the second pneumatic component 105 may be started when the laser assembly 30 is cleaning (i.e., during operation). Alternatively, the second pneumatic component 105 may be started after the laser assembly 30 performs cleaning and when the end cap 220 is not completely closed into the housing 210. This is not limited in the implementations of the present application.

In this way, the dirt generated during the laser cleaning or cleaned out from the surfaces of the housing 210 and the end cap 220 can be sucked by the second pneumatic component 105.

According to some embodiments of the present application, optionally, referring further to FIGS. 1 and 11, the second pneumatic component 105 comprises a sucking member 1051 surrounding the second fixing member 20, the sucking member 1051 is provided with a first sucking channel 10511, a port of the first sucking channel 10511 faces the housing 210, and a negative pressure is formed in the first sucking channel 10511.

Specifically, the sucking member 1051 may be a component itself having a negative pressure, and the sucking member 1051 may be in various structural forms. For example, the sucking member 1051 may be of a ring structure, a frame structure, a hemispherical structure, etc. The suction member 1051 may partially surround the second fixing member 20, or the sucking member 1051 may omnidirectionally surround the second fixing member 20. When the sucking member 1051 omnidirectionally surrounds the second fixing member 20, the sucking member 1051 has the best suction effect.

The first sucking channel 10511 may be a negative pressure space in the sucking member 1051, and dirt on the surfaces of the housing 210 and the end cap 220 or dust generated when the laser assembly 30 is operating can be sucked to the first sucking channel 10511. The port of the first sucking channel 10511 may be an opening of the first sucking channel 10511. Causing the port of the first sucking channel 10511 to face the housing 210 enables the first sucking channel 10511 to have a higher working efficiency. It may be understood that the sucking member 1051 surrounds the second fixing member 20, that is, the sucking member 1051 surrounds the end cap 220, while the port of the first sucking channel 10511 faces the housing 210, so that while operating, the sucking member 1051 can suck the dirt from the surfaces of the housing 210 and the end cap 220 or the dust generated when the laser assembly 30 is operating. Such a design also reduces the space occupation and the production cost.

In this way, the port of the first sucking channel 10511 faces the housing 210, so that the first sucking channel 10511 can effectively suck the dirt generated during the laser cleaning or cleaned out from the surfaces of the housing 210 and the end cap 220.

According to some embodiments of the present application, optionally, referring further to FIGS. 1, 4 and 5, a second sucking channel 12 configured to face the end cap 220 is formed in the first fixing member 10, and the second pneumatic component 105 is configured to form a negative pressure in the second sucking channel 12.

Specifically, the second sucking channel 12 may be a negative pressure space in the first fixing member 10, and the second sucking channel 12 may be formed by penetrating the first fixing member 10. Causing the port of the second sucking channel 12 to face the housing 210 enables the first sucking channel 10511 to have a higher working efficiently, and the second pneumatic component 105 enables a negative pressure to be formed in the second sucking channel 12 by vacuumizing, etc., which is not limited herein in the implementations of the present application.

In this way, the second sucking channel 12 is provided in the first fixing member 10, so that the second sucking channel 12 can effectively suck the dirt generated during the laser cleaning or cleaned out from the surfaces of the housing 210 and the end cap 220.

According to some embodiments of the present application, optionally, referring further to FIG. 3, the cleaning device 100 further comprises a feeding assembly 106. The feeding assembly 106 is configured to fix the end cap 220 when the end cap 220 is separated from the housing 210.

Specifically, the feeding assembly 106 may be a component for grasping the end cap 220, and the feeding assembly 106 may grasp the end cap 220 produced from a previous process. The feeding assembly 106 may limit all the displacements of the end cap 220 relative to the feeding assembly 106, and the feeding assembly 106 may realize movement of the end cap 220 in any direction, such as axial overturning and radial overturning. The feeding assembly 106 may fix the end cap 220 when the end cap 220 is separated from the housing 210. In other words, the feeding assembly 106 may fix the housing 210 when the end cap 220 is not snap-fitted with the housing 210.

In this way, the end cap 220 can be fixed to the feeding assembly 106, so that the end cap 220 does not fall off when separated from the housing 210. In addition, the feeding assembly 106 can drive the end cap 220 to move closer to or away from the housing 210, thereby realizing the snap fit between the housing 210 and the end cap 220.

According to some embodiments of the present application, optionally, referring further to FIGS. 1 and 3, the feeding assembly 106 comprises a second mounting member 1061 and a second suction member 1062 fixed to the second mounting member 1061, and the second suction member 1062 is configured to suck the end cap 220.

Specifically, the second mounting member 1061 may be a device for mounting. For example, the second mounting member 1061 may be a holder, and the second mounting member 1061 may comprise one or more mounting points. The second suction member 1062 may be fixedly connected to the second mounting member 1061 by means of bolted connection, but the specific form of connection between the second suction member 1062 and the second mounting member 1061 is not limited in the implementations of the present application. Without limitation, the second suction member 1062 may be an element in various structural forms. For example, the second suction member 1062 may be an element for sucking by means of a gas, an element for attracting by means of a magnetic force, or the like. The second suction member 1062 can stably suck the end cap 220, such that the end cap 220 would not fall off during assembly.

In this way, the end cap 220 can be effectively fixed to the second suction member 1062, thereby preventing the displacement of the end cap 220 relative to the feeding assembly 106, and further enabling the end cap 220 to be accurately positioned before being snap-fitted with the housing 210.

According to some embodiments of the present application, optionally, referring further to FIGS. 1 and 3, the feeding assembly 106 further comprises a positioning driving component 1063 connected to the second mounting member 1061. The positioning driving component 1063 is configured to drive the second mounting member 1061 to move closer to or away from the end cap 220.

Specifically, the positioning driving component 1063 may be a component having a driving function, and the positioning driving component 1063 may be fixedly connected to the second mounting member 1061 in the form of bolted connection, but the specific method of connection between the positioning driving component 1063 and the second mounting member 1061 is not limited in the implementations of the present application. The positioning driving component 1063 may drive the second mounting member 1061 to move in a plurality of directions, for example, to perform translation in a plane, or the like. Further, the positioning driving component 1063 may drive the second mounting member 1061 to move closer to or away from the end cap 220. The positioning driving component 1063 is, for example, a component comprising a screw motor.

In this way, the positioning driving component 1063 enables the second mounting member 1061 to move closer to or away from the end cap 220, such that the end cap 220 can be sucked or released.

According to some embodiments of the present application, optionally, referring further to FIGS. 1 and 3, the cleaning device 100 further comprises an overturning driving component 107 connected to the feeding assembly 106. The overturning driving component 107 is configured to drive the feeding assembly 106 to rotate, so as to cause a surface of the end cap 220 that is closed into the housing 210 to face the housing 210.

Specifically, the overturning driving component 107 may be a component having a driving function, and the overturning driving component 107 may drive the feeding assembly 106 to rotate in a plurality of directions, for example, to perform radial rotation, axial rotation, etc. The overturning driving component 107 is, for example, a component comprising an electric motor. In other words, the feeding assembly 106 may be driven by the electric motor to rotate.

In this way, the overturning driving component 107 can drive the feeding assembly 106 to rotate, thereby driving the end cap 220 to rotate, and further enabling the end cap 220 and the housing 210 to be mutually positioned in a rotation direction.

According to some embodiments of the present application, optionally, referring further to FIGS. 1 and 3, the cleaning device 100 further comprises a pushing driving component 108 connected to the feeding assembly 106. The pushing driving component 108 is configured to push the end cap 220 to be partially closed into the housing 210 when the surface of the end cap 220 that is closed into the housing 210 faces the housing 210.

Specifically, the pushing driving component 108 may be a component having a driving function, and the pushing driving component 108 may be fixedly connected to the feeding assembly 106 in the form of bolted connection, but the specific method of connection between the pushing driving component 108 and the feeding assembly 106 is not limited in the implementations of the present application. The pushing driving component 108 is, for example, a component comprising an air cylinder and a screw motor. The pushing driving component 108 may drive the feeding assembly 106 to move toward the housing 210. Further, the pushing driving component 108 may drive the end cap 220 to move in a direction approaching the housing 210, such that the end cap 220 is partially closed into the housing 210.

In this way, the pushing driving component 108 enables the end cap 220 and the housing 210 to be pre-assembled before being cleaned by laser.

According to some embodiments of the present application, optionally, referring further to FIGS. 3 and 12, FIG. 12 is a schematic diagram of a tab 2301 of a battery cell before being folded according to some embodiments of the present application. The material 200 comprises a battery cell, the battery cell comprises an electrode assembly 230, and the electrode assembly 230 is at least partially accommodated in the housing 210 and is connected to the end cap 220 via a tab 2301. The cleaning device 100 comprises a shaping assembly 109. The shaping assembly 109 is configured to bend the tab 2301 into a predetermined state when the end cap 220 is overturned relative to the housing 210.

Specifically, the battery cell refers to a smallest unit of a battery (as shown in FIG. 27). The electrode assembly 230 may comprise a tab 2301, and the tab 2301 is partially exposed outside the housing 210 during assembly. The shaping assembly 109 may be a metal sheet with a certain thickness. The shaping assembly 109 may abut against at least a partial area of the tab 2301, and the shaping assembly 109 enables the tab 2301 to be folded based on this partial area. When the end cap 220 is overturned relative to the housing 210, further, when the feeding assembly 106 enables the end cap 220 to be overturned relative to the housing 210, the shaping assembly 109 may bend the tab 2301 into a predetermined state. In this predetermined state, the tab 2301 may be completely accommodated inside the housing 210.

In this way, the end cap 220 may be connected to the housing 210 via the tab 2301. Further, the shaping assembly 109 can bend the tab 2301 into the predetermined state, such that the tab 2301 can be folded in the housing 210.

According to some embodiments of the present application, optionally, referring further to FIGS. 3 and 12, the shaping assembly 109 comprises an abutting member 1091 and an abutting driving component 1092 connected to the abutting member 1091. The abutting driving component 1092 is configured to drive the abutting member 1091 to move closer to or away from the electrode assembly 230, and when the abutting member 1091 moves closer to the electrode assembly 230, the abutting member 1091 is configured to abut against a pre-bent part of the tab 2301 during bending of the tab 2301.

Specifically, the abutting member 1091 may be a metal sheet with a certain structural strength. The abutting member 1091 should have a certain thickness, and a part of the abutting member 1091 in contact with the tab 2301 should be rounded to prevent the abutting member 1091 from damaging the tab 2301. The abutting driving component 1092 may be a component having a driving function, and the abutting driving component 1092 may be fixedly connected to the abutting member 1091 in the form of bolted connection, but the specific method of connection between the abutting driving component 1092 and the abutting member 1091 is not limited in the implementations of the present application.

The abutting driving component 1092 is, for example, a component comprising an air cylinder and a screw motor. The abutting driving component 1092 may drive the abutting member 1091 to move closer to or away from the electrode assembly 230. Further, the abutting driving component 1092 may drive the abutting member 1091 to move closer to or away from the tab 2301, and the abutting driving component 1092 may drive the abutting member 1091 to just come into contact with the tab 2301. At the moment when the abutting member 1091 comes into contact with the tab 2301, the abutting driving component 1092 should stop driving the abutting member 1091 from continuing to move in this direction, and when the tab 2301 is bent into the predetermined state, the abutting driving component 1092 should drive the abutting member 1091 to be separated from the tab 2301. Further, the abutting driving component 1092 should drive the abutting member 1091 away from an area between the end cap 220 and the housing 210.

In this way, the abutting driving component 1092 can drive the abutting member 1091 to move closer to or away from the electrode assembly 230, such that the abutting member 1091 abuts against the pre-bent part of the tab 2301, thereby enabling the tab 2301 connected to the electrode assembly 230 to be bent, and further enabling the tab 2301 to be folded in the housing 210.

According to some embodiments of the present application, optionally, referring further to FIGS. 1 and 3, the laser assembly 30 comprises a laser head 31 and a moving component 32. The laser head 31 is mounted on the moving component 32, and the moving component 32 can drive the laser head 31 to move.

Specifically, the laser head 31 may be available in the market or customized, which is not limited in the implementations of the present application. The laser head 31 may be an exit head and a galvanometer. The moving component 32 may be a movable component. Further, the moving component 32 may be a component moving in a plurality of directions, such as axially moving in a plane or radially moving in a plane. The laser head 31 may be fixedly connected to the moving component 32 by means of bolted connection, but the specific method of connection between the laser head 31 and the moving component 32 is not limited in the implementations of the present application. The moving component 32 may drive the laser head 31 to move. When the moving component 32 drives the laser head 31 to move in a mounting plane parallel to the housing 210 and the end cap 220, it is possible to cooperate with the rotation of the first fixing member 10 and the second fixing member 20 to realize omnidirectional cleaning of the outer surfaces of the housing 210 and the end cap 220. When the moving component 32 drives the laser head 31 to move closer to or away from a mounting platform (which may be understood as a mounting basic surface of all the components) of the cleaning device 100, a defocusing amount of the laser head 31 can be adjusted, thereby optimizing the cleaning effect.

The moving component 32 may drive the laser head 31 to move in at least one of three directions perpendicular to one another, so that the laser head 31 has a wider moving range.

In this way, the movement of the laser head 31 enables a pre-weld between the end cap 220 and the housing 210 and its nearby area to be cleaned omnidirectionally.

According to some embodiments of the present application, optionally, referring further to FIGS. 3, 5 and 12, the cleaning device 100 further comprises a cap-closing driving component 110. The cap-closing driving component 110 is connected to the second fixing member 20, and the cap-closing driving component 110 is configured to drive the second fixing member 20 to move closer to or away from the first fixing member 10.

Specifically, the cap-closing driving component 110 may be a component having a driving function, and the cap-closing driving component 110 may be fixedly connected to the second fixing member 20 in the form of bolted connection, but the specific method of connection between the cap-closing driving component 110 and the second fixing member 20 is not limited in the implementations of the present application. The cap-closing driving component 110 is, for example, a component comprising an air cylinder, a screw motor, etc. that can drive the second fixing member 20 to move linearly. The cap-closing driving component 110 may drive the second fixing member 20 to move closer to or away from the first fixing member 10, so that the end cap 220 and the housing 210 can move closer to each other.

In this way, the cap-closing driving component 110 is configured to drive the second fixing member 20 to move closer to or away from the first fixing member 10, so that the end cap 220 and the housing 210 can be completely assembled together after being cleaned.

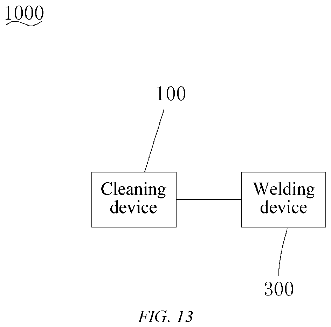

According to some embodiments of the present application, referring further to FIGS. 1, 8 and 13, FIG. 13 is a schematic diagram of a production system 1000 according to some embodiments of the present application. The present application further provides a production system 1000, which comprises a cleaning device 100 in the above embodiments. The production system 1000 is configured to assemble a material 200 described above. The production system 1000 further comprises a welding device 300. The welding device 300 is located downstream of the cleaning device 100 and is configured to weld the housing 210 to the end cap 220. Specifically, the welding device 300 may be in various forms, for example, perform laser welding, arc welding, and vacuum welding.

In this way, after the cleaning is completed, the housing 210 and the end cap 220 may be welded together, and the welding yield is high because there is no dirt during welding.

According to some embodiments of the present application, a cleaning device 100 is provided. The cleaning device 100 comprises a first fixing member 10, a second fixing member 20, and a laser assembly 30. By respectively arranging the housing 210 and the end cap 220 on the first fixing member 10 and the second fixing member 20, the laser assembly 30 is arranged in an area facing the first fixing member 10 and the second fixing member 20. The end cap 220 moves closer to the housing 210 by means of the feeding assembly 106, and is snap-fitted with the housing 210 by means of a plurality of driving members. When the end cap 220 is partially snap-fitted with the housing 210, the laser assembly 30 starts to operate to omnidirectionally clean the housing 210 and the end cap 220. A first pneumatic component 104 and a second pneumatic component 105 are respectively arranged in areas close to the first fixing member 10 and the second fixing member 20, the housing 210 and the end cap 220 are omnidirectionally cleaned again under the action of a gas pressure, and finally the housing 210 and the end cap 220 are welded to each other by a welding device. This solution effectively improves the yield of welding the end cap 220 to the housing 210, and further reduces the production cost of the production system.

In an example of the present application, a process of cleaning the material 200 is as follows.

First, the housing 210 is clamped by a plurality of clamping members 11, and the end cap 220 is sucked by the second suction member 1062, and then the overturning driving component 107 drives the second mounting member 1061 to rotate, such that the end cap 220 is overturned to face the housing 210.

Then, the pushing driving component 108 drives the second suction member 1062 to which the end cap 220 is sucked, such that the end cap 220 is partially closed into the housing 210.

Then, the pushing driving component 108 cancels the suction to the end cap 220, and the pushing driving component 108 is restored to a position away from the end cap 220.

Further, the first pneumatic component 104 injects a gas into the housing 210 through the filling port 221, and the first sucking channel 10511 and the second sucking channel 12 form a negative pressure.

Then, the first driving subcomponent 61 drives the first fixing member 10 to rotate so as to drive the housing 210 to rotate, and the second driving subcomponent 62 drives the second fixing member 20 to rotate synchronously with the first fixing member 10, such that the housing 210 rotates synchronously with the end cap 220.

Then, the laser assembly 30 emits laser light to the housing 210 and the end cap 220 to clean the housing 210 and the end cap 220.

Finally, the cap-closing driving component 110 drives the second fixing member 10 to move, so as to close the end cap 220 into the housing 210, such that the end cap 220 is completely snap-fitted with the housing 210.

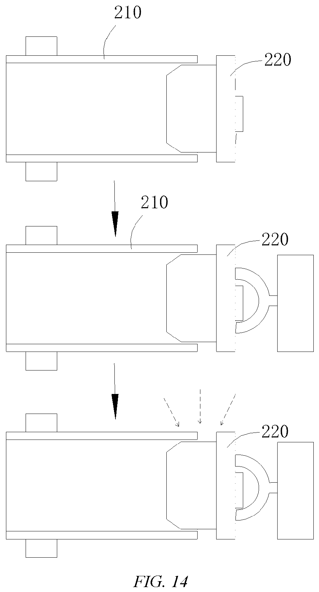

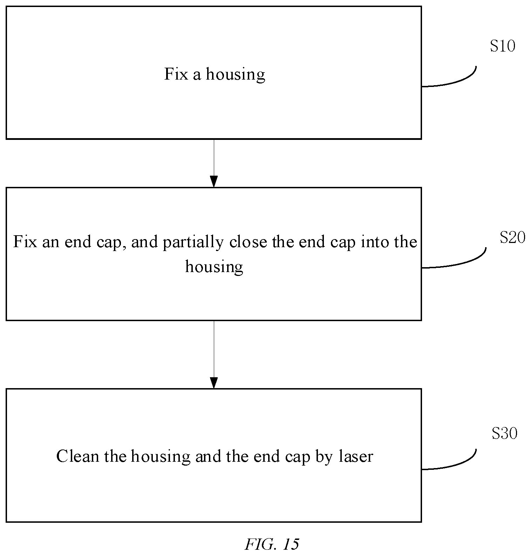

According to some embodiments of the present application, referring further to FIGS. 3, 5, 14 and 15, FIG. 14 is a schematic diagram of a state process according to some embodiments of the present application, and FIG. 15 is a schematic flowchart according to some embodiments of the present application. The present application provides a cleaning method for cleaning a material 200. The material 200 comprises a housing 210 and an end cap 220. The cleaning method comprises the following steps.

In step S10, the housing 210 is fixed.

In step S20, the end cap 220 is fixed, and the end cap 220 is partially closed into the housing 210.

In step S30, the housing 210 and the end cap 220 are cleaned by laser.

Specifically, the housing 210 may be fixed by a first fixing member 10, the end cap 220 may be fixed by a second fixing member 20, the end cap 220 may be partially closed into the housing 210, and the housing 210 and the end cap 220 may be laser-cleaned by a laser assembly 30.

It should be noted that the illustration is only an exemplary explanation, and the execution order of step S10 and step S20 is not limited in the implementations of the present application, that is, step S10 and step S20 can be interchanged in order.

In this way, in the cleaning method according to the implementations of the present application, the material 200 can be cleaned before welding, so that dirt generated during assembly of the housing 210 and the end cap 220 can be effectively prevented from entering the housing 210, and dust generated during laser cleaning can be effectively prevented from entering the material 200, thereby effectively solving the pollution defect in the welding of the end cap 220 to the housing 210, and further improving the yield of welding the end cap 220 to the housing 210.

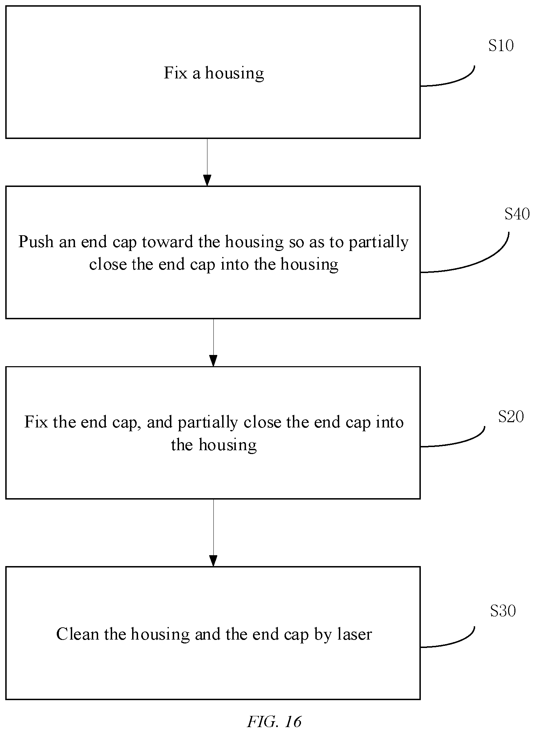

According to some embodiments of the present application, optionally, referring further to FIGS. 1, 8 and 16, FIG. 16 is a schematic flowchart according to some embodiments of the present application. The cleaning method further comprises the following step.

In step S40, the end cap 220 is pushed toward the housing 210 so as to partially close the end cap 220 into the housing 210.

Specifically, the end cap 220 may be pushed toward the housing 210 by using a pushing driving component 108, so as to partially close the end cap 220 into the housing 210.

In this way, the housing 210 and the end cap 220 may be partially assembled together before being cleaned.

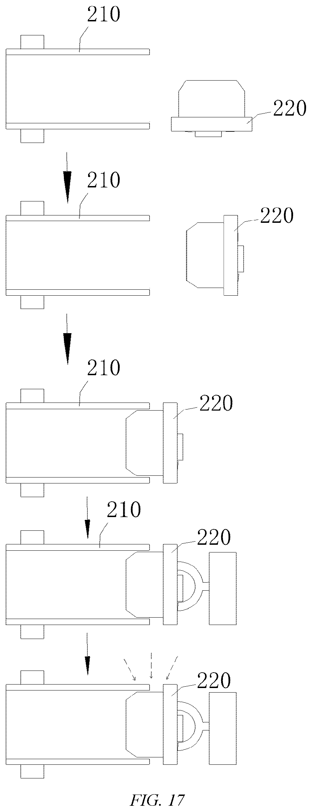

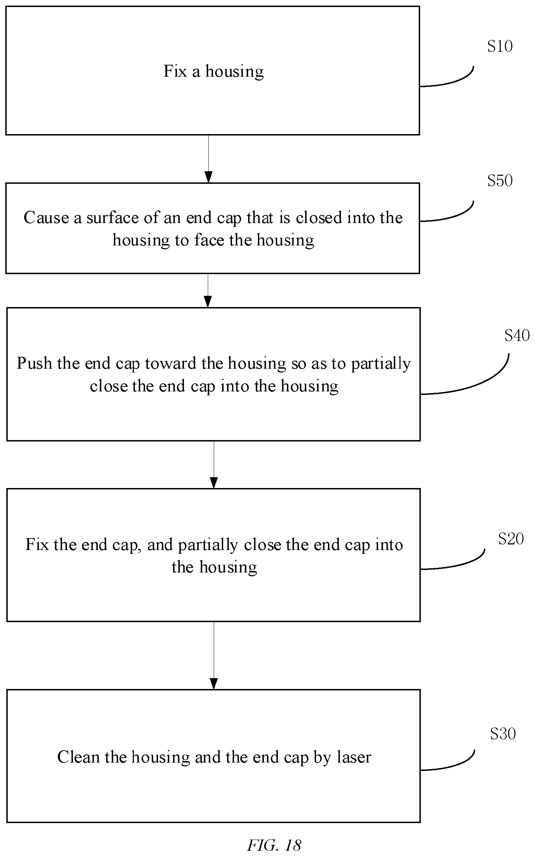

According to some embodiments of the present application, optionally, referring further to FIGS. 1, 8, 17 and 18, FIG. 17 is a schematic diagram of a state process according to some embodiments of the present application, and FIG. 18 is a schematic flowchart according to some embodiments of the present application. The cleaning method further comprises the following step.

In step S50, a surface of the end cap 220 that is closed into the housing 210 is caused to face the housing 210.

Specifically, the surface of the end cap 220 that is closed into the housing 210 may be caused to face the housing 210 by means of the aforementioned overturning driving component 107.

In this way, the end cap 220 can be assembled to the housing 210 by means of overturning.

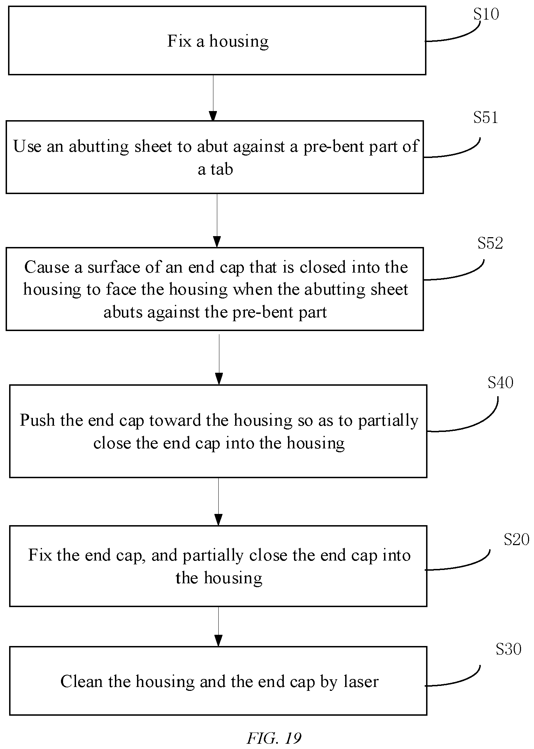

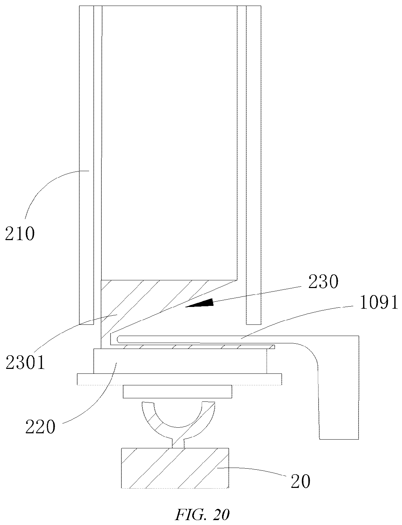

According to some embodiments of the present application, optionally, referring further to FIGS. 3, 8, 12, 19 and 20, FIG. 19 is a schematic flowchart according to some embodiments of the present application, and FIG. 20 is a schematic diagram of a folded tab 2301 of a battery cell according to some embodiments of the present application, showing a folded state of the tab 2301. The material 200 comprises a battery cell, the battery cell comprises an electrode assembly 230, and the electrode assembly 230 is at least partially accommodated in the housing 210 and is connected to the end cap 220 by means of a tab 2301. The step of causing a surface of the end cap 220 that is closed into the housing 210 to face the housing 210 (step S50) comprises the following steps.

In step S51, an abutting member 1091 is used to abut against a pre-bent part of the tab 2301.

In step S52, the surface of the end cap 220 that is closed into the housing 210 is caused to face the housing 210 when the abutting member 1091 abuts against the pre-bent part.

Specifically, an abutting driving component 1092 may use the abutting member 1091 to abut against the pre-bent part of the tab 2301, and when the abutting member 1091 abuts against the pre-bent part, the overturning driving component 107 enables the surface of the end cap 220 that is closed into the housing 210 to face the housing 210.

In this way, the abutting member 1091 abuts against the pre-bent part of the tab 2301, thereby enabling the tab 2301 connected to the electrode assembly 230 to be bent, and further enabling the tab 2301 to be folded in the housing 210.

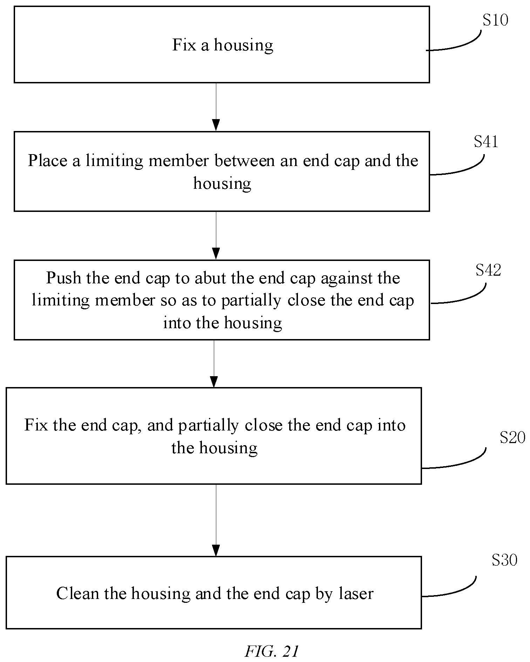

Still referring to FIGS. 3, 8 and 21, FIG. 21 is a schematic flowchart according to some embodiments of the present application. According to some embodiments of the present application, optionally, the step of pushing the end cap 220 to the housing 210 so as to partially close the end cap 220 into the housing 210 (step S40) comprises the following steps.

In step S41, a limiting member 101 is placed between the end cap 220 and the housing 210.

In step S42, the end cap 220 is pushed to abut the end cap against the limiting member 101 such that the end cap 220 is partially closed into the housing 210.

Specifically, the guide member 102 may place the limiting member 101 between the end cap 220 and the housing 210, and the pushing driving component 108 may push the end cap 220 to abut the end cap against the limiting member 101 so as to partially close the end cap 220 into the housing 210.

In this way, the limiting member 101 is placed between the end cap 220 and the housing 210, and the end cap 220 is pushed to abut same against the limiting member 101 so as to partially close the end cap 220 into the housing 210, so that the depth to which the end cap 220 is closed into the housing 210 can be adjusted to reserve a laser cleaning area before welding.

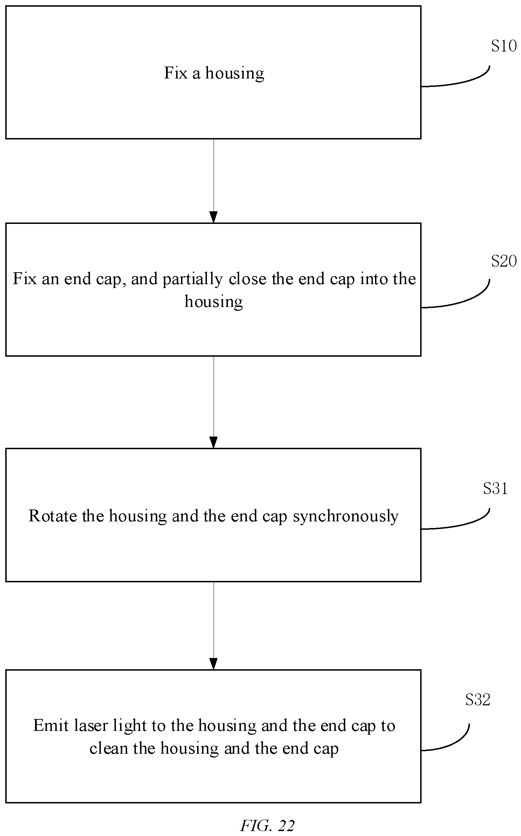

According to some embodiments of the present application, optionally, referring further to FIGS. 3, 6, 7, 8 and 22, FIG. 22 is a schematic flowchart according to some embodiments of the present application. The step of cleaning the housing 210 and the end cap 220 by laser (step S30) comprises the following steps.

In step S31, the housing 210 and the end cap 220 rotate synchronously.

In step S32, laser light is emitted to the housing 210 and the end cap 220 to clean the housing 210 and the end cap 220.

Specifically, the first driving subcomponent 61 and the second driving subcomponent 62 enable the housing 210 and the end cap 220 to rotate synchronously, and the laser head 31 may emit laser light to the housing 210 and the end cap 220 to clean the housing 210 and the end cap 220.

In this way, the synchronous rotation of the housing 210 and the end cap 220 can prevent the housing 210 and the end cap 220 from being damaged due to relative displacement after assembly, and using laser to clean the housing 210 and the end cap 220 can clean out the dirt having strong adhesion to the surfaces of the housing 210 and the end cap 220, so that a better cleaning effect is provided.

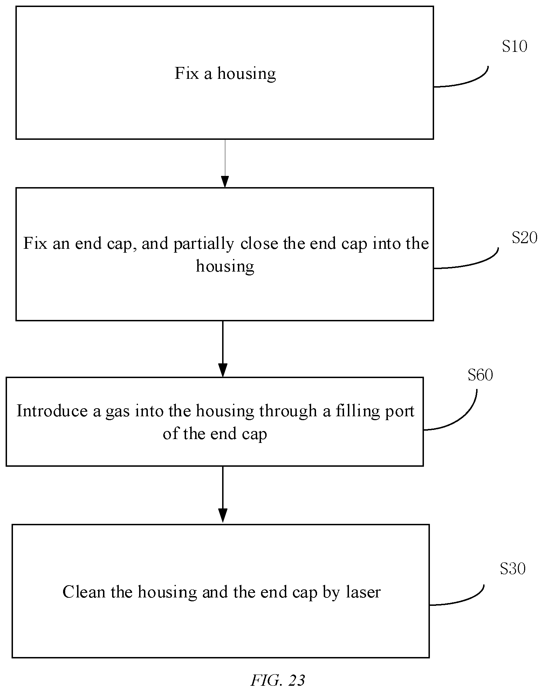

According to some embodiments of the present application, optionally, referring further to FIGS. 3, 6, 10 and 23, FIG. 23 is a schematic flowchart according to some embodiments of the present application. The cleaning method further comprises the following step.

In step S60, a gas is introduced into the housing 210 through a filling port 221 of the end cap 220.

Specifically, the first pneumatic component 104 may introduce the gas into the housing 210 through the filling port 221 of the end cap 220.

In this way, by introducing the gas into the housing 210, a positive pressure can be formed inside the housing 210, so that the housing 210 has an internal pressure greater than an external pressure, thereby effectively preventing dirt generated during laser cleaning or cleaned out from surfaces of the housing 210 and the end cap 220 from entering the housing 210, and further preventing potential safety hazards of the material 200.

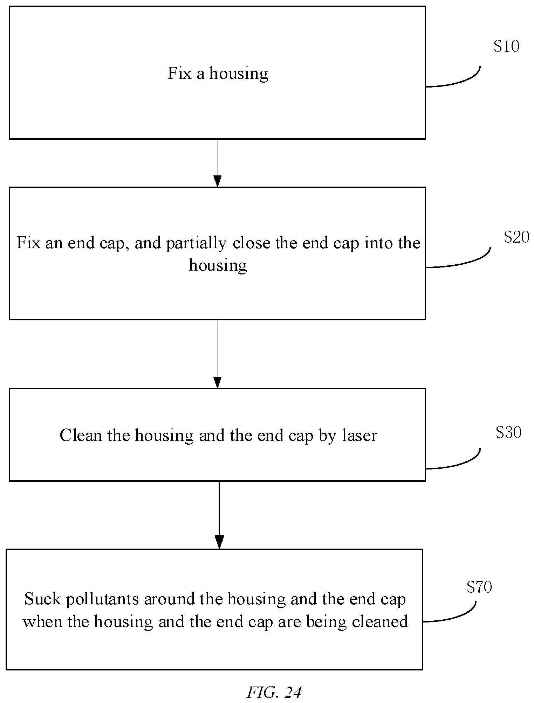

According to some embodiments of the present application, optionally, referring further to FIGS. 6, 8, 11 and 24, FIG. 24 is a schematic flowchart according to some embodiments of the present application. The cleaning method further comprises the following step.

In S70, pollutants around the housing 210 and the end cap 220 are sucked when the housing 210 and the end cap 220 are being cleaned.

Specifically, the first pneumatic component 104 and the second pneumatic component 105 can suck the pollutants around the housing 210 when the housing 210 and the end cap 220 are being cleaned.

In this way, sucking the pollutants around the housing 210 can prevent the dirt from reaching a welding area under the driving of an external environment during or after cleaning to cause poor welding.

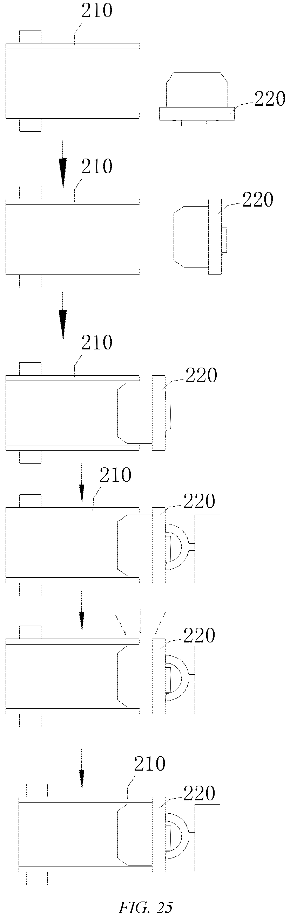

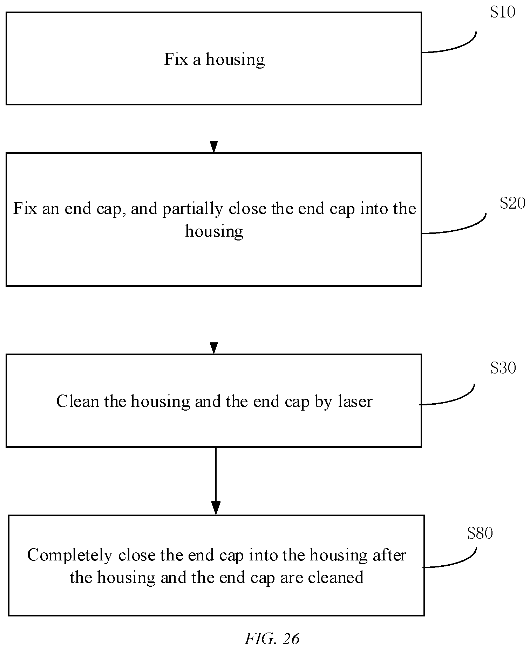

According to some embodiments of the present application, optionally, referring further to FIGS. 3, 8, 25 and 26, FIG. 25 is a schematic diagram of a state process according to some embodiments of the present application, and FIG. 26 is a schematic flowchart according to some embodiments of the present application. The cleaning method further comprises the following step.

In step S80, the end cap 220 is completely closed into the housing 210 after the housing 210 and the end cap 220 are cleaned.

Specifically, the cap-closing driving component 110 enables the end cap 220 to be completely closed into the housing 210 after the housing 210 and the end cap 220 are cleaned.

In this way, the end cap 220 can be completely closed into the housing 210 after being cleaned, so that connection parts of the end cap 220 and the housing 210 can be welded subsequently.

According to some embodiments of the present application, optionally, referring further to FIG. 27, FIG. 27 is a schematic diagram of a structure of a battery 400 according to some embodiments of the present application. The present application further provides a battery 400. The battery 400 is manufactured by using a cleaning method described above. The battery 400 may be a battery cell or a product such as a battery pack that has a housing 210 and an end cap 220.

It should be noted that the explanation of the cleaning device according to the above implementations is applicable to the cleaning method according to the implementations of the present application. For other unexplained parts of the cleaning method according to the implementations of the present application, reference may be made to the corresponding parts of the cleaning device according to the above implementations, which will not be repeated herein.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A cleaning device for cleaning a material which comprises a housing and an end cap, the cleaning device comprising:
a first fixing member configured to fix the housing;
a second fixing member arranged opposite to the first fixing member and configured to fix the end cap; and
a laser assembly arranged on a side of the first fixing member and a side of the second fixing member and configured to clean the housing and the end cap when the end cap is partially closed into the housing.

2. The cleaning device according to claim 1, wherein the first fixing member comprises a plurality of clamping members, which jointly clamp the housing.

3. The cleaning device according to claim 2, wherein the plurality of clamping members are arranged in a circumferential direction of the housing.

4. The cleaning device according to claim 2 or 3, wherein the cleaning device comprises a clamping driving component, which drives the plurality of clamping members to move closer to or away from each other.

5. The cleaning device according to any one of claims 1-4, wherein the second fixing member comprises a first mounting member and a first suction member fixed to the first mounting member, and the first suction member is configured to suck the end cap.

6. The cleaning device according to claim 5, further comprising a protective shell arranged on the first mounting member, wherein the first suction member is located in the protective shell, and the protective shell is configured to cover at least part of an outer surface of the end cap.

7. The cleaning device according to any one of claims 1-6, further comprising a rotation driving component, wherein the rotation driving component is configured to drive the first fixing member and the second fixing member to rotate, or to drive the laser assembly to rotate.

8. The cleaning device according to claim 7, wherein the rotation driving component comprises a first driving subcomponent and a second driving subcomponent, wherein the first driving subcomponent is configured to drive the first fixing member to rotate, and the second driving subcomponent is configured to drive the second fixing member to rotate.

9. The cleaning device according to claim 8, wherein the first fixing member and the second fixing member rotate synchronously.

10. The cleaning device according to claim 8 or 9, comprising a first holder and a rotating component, wherein the rotating component is rotatably arranged on the first holder, the first fixing member is mounted on the rotating component, and the first driving subcomponent is configured to drive the rotating component to rotate, so as to drive the first fixing member to rotate.

11. The cleaning device according to any one of claims 8-10, wherein the first driving subcomponent is located on a side of the first fixing member that faces away from the second fixing member.

12. The cleaning device according to any one of claims 7-10, comprising a second holder, wherein the second fixing member is rotatably connected to the second holder.

13. The cleaning device according to any one of claims 1-12, comprising a limiting member, wherein when the end cap is closed into the housing, the limiting member is arranged between the end cap and the housing for limiting a depth to which the end cap is closed into the housing.

14. The cleaning device according to claim 13, comprising a guide member, wherein the limiting member is arranged on the guide member, and the guide member is configured to guide the end cap to be partially closed into the housing.

15. The cleaning device according to claim 14, wherein a guide channel is formed in the guide member, the guide channel is configured to guide the end cap to be closed into the housing, and the limiting member is arranged in the guide channel.

16. The cleaning device according to claim 15, wherein the guide member comprises a first portion and a second portion arranged spaced apart from the first portion, wherein the first portion and the second portion jointly define the guide channel.

17. The cleaning device according to claim 15 or 16, comprising a guide driving component, wherein the guide driving component is configured to drive the guide member to move closer to or away from the end cap.

18. The cleaning device according to any one of claims 1-17, comprising a first pneumatic component, wherein the first pneumatic component is configured to introduce a gas into the housing through a filling port of the end cap.

19. The cleaning device according to any one of claims 1-18, comprising a second pneumatic component, wherein the second pneumatic component is configured to suck pollutants formed by the laser assembly during operation.

20. The cleaning device according to claim 19, wherein the second pneumatic component comprises a sucking member surrounding the second fixing member, the sucking member is provided with a first sucking channel, a port of the first sucking channel faces the housing, and a negative pressure is formed in the first sucking channel.

21. The cleaning device according to claim 20, wherein a second sucking channel configured to face the end cap is formed in the first fixing member, and the second pneumatic component is configured to form a negative pressure in the second sucking channel.

22. The cleaning device according to any one of claims 1-21, further comprising a feeding assembly, wherein the feeding assembly is configured to fix the end cap when the end cap is separated from the housing.

23. The cleaning device according to claim 22, wherein the feeding assembly comprises a second mounting member and a second suction member fixed to the second mounting member, and the second suction member is configured to suck the end cap.

24. The cleaning device according to claim 23, wherein the feeding assembly further comprises a positioning driving component connected to the second mounting member, and the positioning driving component is configured to drive the second mounting member to move closer to or away from the end cap.

25. The cleaning device according to any one of claims 22-24, further comprising an overturning driving component connected to the feeding assembly, wherein the overturning driving component is configured to drive the feeding assembly to rotate, so as to cause a surface of the end cap that is closed into the housing to face the housing.

26. The cleaning device according to any one of claims 22-25, further comprising a pushing driving component connected to the feeding assembly, wherein the pushing driving component is configured to push the end cap to be partially closed into the housing when the surface of the end cap that is closed into the housing faces the housing.

27. The cleaning device according to any one of claims 1-26, wherein the material comprises a battery cell, the battery cell comprises an electrode assembly, and the electrode assembly is at least partially accommodated in the housing and is connected to the end cap via a tab; and the cleaning device comprises a shaping assembly configured to bend the tab into a predetermined state when the end cap is overturned relative to the housing.

28. The cleaning device according to claim 27, wherein the shaping assembly comprises an abutting member and an abutting driving component connected to the abutting member, wherein the abutting driving component is configured to drive the abutting member to move closer to or away from the electrode assembly, and when the abutting member moves closer to the electrode assembly, the abutting member is configured to abut against a pre-bent part of the tab during bending of the tab.

29. The cleaning device according to any one of claims 1-28, wherein the laser assembly comprises a laser head and a moving component, wherein the laser head is mounted on the moving component, and the moving component is capable of driving the laser head to move.

30. The cleaning device according to any one of claims 1-29, further comprising a cap-closing driving component, wherein the cap-closing driving component is connected to the second fixing member, and the cap-closing driving component is configured to drive the second fixing member to move closer to or away from the first fixing member.

31. A production system, comprising:
a cleaning device according to any one of claims 1-30; and
a welding device located downstream of the cleaning device and configured to weld the housing to the end cap.

32. A cleaning method for cleaning a material which comprises a housing and an end cap, the cleaning method comprising:
fixing the housing;
fixing the end cap, and partially closing the end cap into the housing; and
cleaning the housing and the end cap by laser.

33. The cleaning method according to claim 32, further comprising:
pushing the end cap toward the housing so as to partially close the end cap into the housing.

34. The cleaning method according to claim 33, further comprising:
causing a surface of the end cap that is closed into the housing to face the housing.

35. The cleaning method according to claim 34, wherein the material comprises a battery cell, the battery cell comprises an electrode assembly, and the electrode assembly is at least partially accommodated in the housing and is connected to the end cap via a tab; and
the causing a surface of the end cap that is closed into the housing to face the housing comprises:
using an abutting member to abut against a pre-bent part of the tab; and
turning the surface of the end cap that is closed into the housing toward the housing when the abutting member abuts against the pre-bent part.

36. The cleaning method according to any one of claims 33-35, wherein the pushing the end cap toward the housing so as to partially close the end cap into the housing comprises:
placing a limiting member between the end cap and the housing; and
pushing the end cap to abut the end cap against the limiting member so as to partially close the end cap into the housing.

37. The cleaning method according to any one of claims 32-36, wherein the cleaning the housing and the end cap by laser comprises:
rotating the housing and the end cap synchronously; and
emitting laser light to the housing and the end cap to clean the housing and the end cap.

38. The cleaning method according to any one of claims 32-37, further comprising:
introducing a gas into the housing through a filling port of the end cap.

39. The cleaning method according to any one of claims 32-38, further comprising:
sucking pollutants around the housing and the end cap when the housing and the end cap are being cleaned.

40. The cleaning method according to any one of claims 32-39, further comprising:
completely closing the end cap into the housing after the housing and the end cap are cleaned.

41. A battery, wherein the battery is manufactured by using a cleaning method according to any one of claims 32-40.
